# EUROPEAN PATENT SPECIFICATION

(11) **EP 4 118 160 B1**
(45) Date of publication and mention of the grant of the patent: **23.04.2025**
(21) Application number: 21768145.1
(22) Date of filing: 11.03.2021
(51) Int. Cl.: C09D 109/00, C09D 7/00, C09D 7/45

(54) **COMPOSITIONS AND METHODS FOR MAKING FIRE-RESISTANT EPDM RUBBER**
ZUSAMMENSETZUNGEN UND VERFAHREN ZUR HERSTELLUNG VON FLAMMWIDRIGEN EPDM-KAUTSCHUK
COMPOSITIONS ET PROCÉDÉS DE FABRICATION DE CAOUTCHOUC EPDM IGNIFUGE

(30) Priority: 12.03.2020 US 202062988558 P
(43) Date of publication of application: 18.01.2023
(73) Proprietor: Carlisle Construction Materials, LLC, Carlisle PA 17013 (US)
(72) Inventor: FOKKINGA, Onno, 8263 AD Kampen (NL)
(74) Representative: Mewburn Ellis LLP
(86) International application number: PCT/US2021/021872
(87) International publication number: WO 2021/183743

(56) References cited:
- EP-A1- 3 342 947
- EP-A1- 3 342 947
- WO-A1-2013/102208
- WO-A1-2019/163839
- WO-A1-2022/006066
- JP-A- 2017 061 690
- US-A- 5 792 814
- US-A1- 2008 038 528
- US-A1- 2016 002 929
- US-A1- 2017 267 896
- US-B2- 7 700 707
- PANG XIU-YAN, CHANG WEI-SHU: " Characterization and Flame Retardancy of Expandable Graphite Modified By Ferric Hydroxide. Part II– Flame Retardation and Its Interaction with Ammonium Polyphosphate for Polyethylene", ACADEMIC JOURNAL OF CHEMISTRY, 1 January 2017 (2017-01-01), pages 1 - 7, XP055857493, Retrieved from the Internet <URL:https://www.arpgweb.com/pdf-files/ajc2(1)1-7.pdf> [retrieved on 20211103]

## Description

### CROSS-REFERENCE TO RELATED APPLICATION

### TECHNICAL FIELD

The disclosure herein relates to ethylene propylene diene monomer (EPDM) rubber. More specifically, the present disclosure relates to fire-resistant EPDM rubber. In one embodiment, the fire-resistant EPDM rubber is used for weatherproofing buildings, in particular as a membrane for facade application.

### BACKGROUND

Ethylene propylene diene monomer (EPDM) rubber has many remarkable properties such as heat resistance, chemical resistance, low electrical conductivity, stability at temperatures ranging from -50°F to 350°F, flexibility at low temperatures, and weather resistance, to name a few. EPDM is cost effective and can be fabricated in a variety of ways including custom molding and extruding. EPDM has numerous applications in the automotive industry (e.g., hoses, seals, O-rings, gaskets, accumulator bladders, wire and cable connectors and insulators, diaphragms, and weather stripping); construction (e.g., roofing and waterproofing); HVAC (e.g., compressor grommets, tubing, gaskets, and seals); and many other industries.

The main drawback to EPDM rubber is its flammability. In the construction industry, fire resistance is generally achieved through two different methods, the first is the addition of an external retardant and the second is the use of a ballasted roof system. Accordingly, there is a need for a fire-resistant EPDM rubber. JP 2017 061690A discloses a rubber composition that maintains fire resistance while improving workability.

### SUMMARY

The disclosure herein is directed to fire-resistant EPDM rubber. In one embodiment, the EPDM includes ethylene propylene diene monomer (EPDM) polymer, aluminum hydroxide, tris(2-ethylhexyl) phosphate, expandable graphite, and a maleic anhydride adduct of polybutadiene; wherein the composition does not contain mineral oil. The foregoing composition can also include a curing agent such as sulfur or a sulfur releasing compound. The foregoing composition can also include activators and/or accelerators such as zinc oxide, steric acid, tetrabenzyl thiuram disulfide. In one embodiment, the composition is halogen free. In one embodiment, the composition is antimony trioxide free. In one embodiment, the composition is halogen free and antimony trioxide free.

A non-limiting example of a fire-resistant EPDM formulation is sulfur, tetrabenzyl thiuram disulfide, N-cyclohexyl-2-benzothiazylsulphenamide, zinc oxide, stearic acid, a maleic anhydride adduct of polybutadiene, expandable graphite, carbon black N550, tris(2-ethylhexyl) phosphate, and aluminum hydroxide. In one embodiment, the composition does not include mineral oil. In one embodiment, the composition may be halogen free. In one embodiment, the composition may be antimony trioxide free. In one embodiment, the composition may be both halogen free and antimony trioxide free.

In another aspect of the invention there is provided a method for making an EPDM roofing membrane comprising the steps of: processing a homogeneous mixture of the composition of any one of the previous embodiments using either calendaring or a roller die extruder; and heat curing the membrane with or without pressure.

### DETAILED DESCRIPTION

Ethylene propylene diene monomer (EPDM) rubber is a synthetic rubber compound made from ethylene, propylene, and diene monomers that can be crosslinked via sulfur vulcanization. Because EPDM is purely a hydrocarbon, it can easily catch fire. This disclosure is directed to an EPDM rubber that is fire-resistant. In particular, this disclosure is directed to an EPDM rubber that meets the European Classification for building materials EN 13501-1 class B.

### Definitions

In the description that follows, a number of terms are extensively utilized. The following non-limiting definitions provide a clear and consistent understanding of the specification and claims, including the exemplary scope to be given such terms.

When the terms "one," "a," or "an" are used in this disclosure, they mean "at least one" or "one or more," unless otherwise indicated.

The terms "invention" or "present invention" as used herein are intended to be non-limiting and are not intended to refer to any single embodiment of the particular invention but encompasses all possible embodiments as described in the specification and the claims and their equivalents.

When proportions of constituent ingredients are expressed in percentages, they should be understood to be expressed as parts per hundred rubber (PHR).

### Composition

EPDM rubber compounds generally include an EPDM polymer, (providing waterproof and elastic properties) and one or more of the following: (1) oil extenders; (2) crosslinkers/curing agents; (3) processing aids; (4) accelerators (which assist the vulcanization process); (5) antioxidants (for weather resistance); (6) antiozonants (for ozone resistance); (7) softeners and plasticizers (which improve pliability); (8) fillers, reinforcing (which increase moduli of elasticity and toughness) and/or non-reinforcing; (9) flame retardants; and (10) other agents.

Various diene monomers can be used in the formation of the EPDM polymer. Non-limiting examples of suitable diene monomers include ethylidene norbornene, dicyclopentadiene, vinyl norbornene, alkyldicyclopentadiene, 1,4-pentadiene, 1,4-hexadiene, 1,5-hexadiene, 1,4-heptadiene, 2-methyl-1,5-hexadiene, cyclooctadiene, 1,4-octadiene, 1,7-octadiene, 5-ethylidene-2-norbornene, 5-n-propylidene-2-norbornene, and 5-(2-methyl-2-butenyl)-2-norbornene, and mixtures thereof.

In certain embodiments, the oils may be halogenated.

Non-limiting examples of suitable crosslinkers/curing agents include peroxides such as alpha-cumyl hydroperoxide, methylethylketone peroxide, hydrogen peroxide, acetylacetone peroxide, t-butyl hydroperoxide, t-butyl peroxybenzoate, 2,5-bis(t-butylperoxy)-2,5-dimethylhexene, lauryl peroxide, benzoyl peroxide, 2,4-dichlorobenzoyl peroxide, dibenzoyl peroxide, bis(p-monomethylene-benzoyl) peroxide, bis(p-nitrobenzoyl peroxide, phenylacetyl peroxide, p-quinone dioxime, lead peroxide, zinc peroxide, barium peroxide, copper peroxide, potassium peroxide, silver peroxide, sodium peroxide, calcium peroxide, metallic peroxyborates, peroxychromates, peroxydicarbonates, peroxydiphosphates, peroxydisulfates, peroxygermanates, peroxymolybdates, peroxynitrates, magnesium peroxide, sodium pyrophosphate peroxide, and mixtures thereof. Other non-limiting examples of crosslinkers/curing agents include sulfur with accelerators, resins, and radiation.

Non-limiting examples of suitable processing aids include hydrocarbon resins, fatty acid soaps, fatty acid esters, paraffins, polyethylene waxes, EVA waxes, phenolic resins, poly(ethylene-co-acrylic acid), and mixtures thereof.

Non-limiting examples of suitable accelerators include sulfur, mercaptans, benzothiazoles, thiurams, zinc oxide, stearic acid, benzothiazolesulfenamides, dithiocarbamates, thioureas, N-cyclohexyl-2-benzothiazolesulfenamide (CBS), N-tert-butyl-2-benzothiazolesulfenamide (TBBS), 2,2'-dithiobis(benzothiazole) (MBTS), tetramethyl thiuram disulfide (TMTD), tetramethyl thiuram monosulfide (TMTM), zinc dibutyl dithiocarbamate (ZDBC), zinc dimethyl dithiocarbamate (ZDM), tetrabenzyl thiuram disulfide (TBzTD), di-o-tolylguanidine (DOTG), diphenylguanidine (DPG), 4,4'-dithiodimorpholine (DTDM), hexamethylenetetramine (HMTA), mercaptobenzothiazole (MBT), nickel dibutyl dithiocarbamate (NDBDC), N-(cyclohexylthio) phthalimide (PVI), copper dialkyl dithiophosphate (CUT), dithiocaprolactam, zinc amine-dithiophosphate (ZAT), tetrabutyl thiuram disulfide (TBTS), zinc dibenzyl dithiocarbamate (ZBEC), zinc dialkyl dithiophosphate (ZDDP), zinc diethyl dithiocarbamate (ZDEC), zinc ethyl phenyl dithiocarbamate (ZEPD), dipentamethylene thiuram tetrasulfide (DPTT), 2-mercaptobenzothiazoles; 2,2'-dithiobenzothiazole, N-cycohexylbenzothiazole-2-sulfenamide, N-tert-butylbenzothiazole-2-sulfenamide, tetramethyl thiuram disulfide, tetramethyl thiuram monosulfide, tetrabutyl thiuram disulfide, tetraethyl thiuram monosulfide, dipentamethylene thiuram hexasulfide, N,N-dibutyl thiourea, N,N-diethyl thiourea, sulfur donor-type accelerators, other organic accelerators, and mixtures thereof.

Non-limiting examples of suitable softeners and plasticizers include paraffinic oils, naphthenic oil, diisononyl phthalate (DINP), diisodecyl phthalate (DIDP), dioctyl phthalate (DOP), di-n-hexyl phthalate, isodecyl diphenyl phosphate (e.g., Santicizer^{®} 148), tris(2-ethylhexyl) phosphate (TEHP), and mixtures thereof.

Non-limiting examples of suitable fillers include carbon black, clay, talc, ground coal, silicas, mica, calcium carbonate, other organic materials, and mixtures thereof.

Non-limiting examples of suitable flame retardants include aluminum hydroxide (also referred to as aluminum trihydroxide), magnesium hydroxide, expandable graphite, zinc borate, ammonium polyphosphate, melamine polyphosphate, antimony oxide, and mixtures thereof.

Non-limiting examples of other suitable agents include a maleic anhydride adduct of polybutadiene, anti-degradants (e.g., waxes and paraffinic products), poly(1,2-dihydro-2,2,4-trimethylquinoline (TMQ), methyl-2-mercaptobenzimidazole (MMBI), N-isopropyl-N'-phenyl-1,4-phenylenediamine (IPPD), N-(1,3-dimethylbutyl)-N'-phenyl-p-phenylenediamine (6PPD), butylated hydroxytoluene (BHT)), and mixtures thereof.

In certain embodiments, the EPDM rubber compound includes a flame retardant. In such embodiments, the amount of flame retardant can be from about 2% to about 90%. In certain embodiments, the flame retardant is aluminum hydroxide, expandable graphite, or both. In such embodiments, the amount of aluminum hydroxide can be from about 10% to about 90%, and the amount of expandable graphite can be from about 2% to about 25%.

In certain embodiments, the EPDM rubber compound includes a crosslinker. In such embodiments, the amount of cross linker can be from about 1% to about 10%. In certain embodiments, the crosslinker can be a maleic anhydride adduct of polybutadiene. In such embodiments, the amount of maleic anhydride adduct of polybutadiene can be from about 1% to about 10%.

In certain embodiments, the EPDM rubber compound includes a plasticizer. In such embodiments, the amount of plasticizer can be from about 1% to about 60%. In certain embodiments, the plasticizer is not mineral oil. In certain embodiments, the plasticizer is tris(2-ethylhexyl) phosphate. In such embodiments, the amount of tris(2-ethylhexyl) phosphate can be from about 1% to 25%.

In certain embodiments, the EPDM rubber compound includes fillers. In such embodiments, the amount of fillers can be from about 1% to about 50%. In certain embodiments, the filler can be carbon black. In such embodiments, the amount of carbon black can be from about 1% to about 50%.

In certain embodiments, the EPDM rubber compound includes a curing agent. In such embodiments, the amount of curing agent can be from about 1% to about 5%. In certain embodiments, the curing agent is sulfur. In such embodiments, the amount of sulfur can be from about 1% to about 3%.

In certain embodiments, the EPDM rubber compound includes an accelerator. In such embodiments, the amount of accelerator can be from about 1% to about 10%. In certain embodiments, the accelerator is tetrabenzyl thiuram disulfide, zinc oxide, steric acid, or combinations thereof. In such embodiments, the amount of tetrabenzyl thiuram disulfide can be from about 1% to about 8%, the amount of zinc oxide can be from about 1% to about 10%, and the amount of steric acid can be from about 1% to about 5%.

In certain embodiments, the EPDM rubber compound includes EPDM, aluminum hydroxide, expandable graphite, and a maleic anhydride adduct of polybutadiene. In one embodiment, the compound does not contain mineral oil. In one embodiment, the compound is halogen free. In one embodiment, the compound is antimony trioxide free. In one embodiment, the compound is both halogen and antimony trioxide free.

In certain embodiments, the EPDM rubber compound includes EPDM, sulfur, tetrabenzyl thiuram disulfide, N-cyclohexyl-2-benzothiazylsulphenamide, zinc oxide, stearic acid, a maleic anhydride adduct of polybutadiene, Carbofoil L-120, carbon black n550, tris(2-ethylhexyl) phosphate; and aluminum hydroxide. In one embodiment, the compound does not contain mineral oil. In one embodiment, the compound is halogen free. In one embodiment, the compound is antimony trioxide free. In one embodiment, the compound is both halogen and antimony trioxide free.

### Methods

Making the EPDM rubber products generally involves two steps, processing a mixture into a product, and then curing the product. To form a homogenous mixture, the ingredients may be blended together using a high-shear mixing machine such as an internal mixer. Non-limiting examples of suitable mixers include Banbury mixers, which are internal mixers or mills or extruders. During the processing step, the homogenous mixture may be formed into its final shape using molding, calendaring, or extruding (e.g., a roller die). Curing may be done using various methods including heating (with or without pressure) and radiation (with or without pressure).

In one embodiment, the EPDM rubber compounds described herein may be processed into roofing material, specifically an EPDM membrane for façade application. The membranes are generally about 0.5 millimeters (mm) thick to about 3 mm thick. The membranes are generally made of one layer of EPDM rubber or two or more layers of EPDM rubber that may be calendared or laminated together. In some embodiments, the membranes can include a fabric layer in or laminated on one or both sides. In some embodiments, the membranes can include a glass scrim layer adhered to one or both sides.

### EXAMPLES

### Example 1 - EPDM Rubber Formula

In this example, various fire-resistant EPDM rubber membranes were made using the following formulas.

| **Material** | **CAS No.** | **PHR*** |
|---|---|---|
| EPDM | 025038-36-2 | 100 |
| Sulfur | 7704-34-9 | 0.9 |
| Tetrabenzyl thiuram disulfide | 10591-85-2 | 0.28 |
| N-cyclohexyl-2-benzothiazylsulphenamide | 000095-33-0 | 0.56 |
| Zinc Oxide | 001314-13-2 | 3 |
| Stearic acid | 57-11-4 | 1 |
| Maleic anhydride adduct of polybutadiene | | 2.94 |
| Expandable graphite | 12777-87-6 | 20 |
| Carbon black N550 | 001333-86-4 | 20 |
| tris (2-ethylhexyl) phosphate | 000078-42-2 | 20 |
| Aluminum Hydroxide | 021645-51-2 | 180 |

| | | |
|---|---|---|
| * PHR = Parts per Hundred Rubber | | |

The materials in the amounts listed above were added to a Banbury mixer, and mixed for 5 minutes reaching a final temperature of 135 °C. The mixture was dropped onto a sheeting mill and formed into slabs 8 millimeters thick. The slabs were processed into sheets 1.0 and 1.2 millimeters thick. Optionally, two thinner sheets may be laminated into one membrane of the same thickness. A polyamide liner was applied, and the membranes were placed on rolls. The rolls were loaded into a hot air oven to cure under heat.

### Example 2 - Open Flame Test

In this example, the EPDM membrane of Example 1 was evaluated by direct contact with a single flame. Flame from a torch was held to the membrane for 30 seconds, single flame source test EN 11925-2 class B, C, or D. The membrane glowed red where the flame touched it. However, once the flame was removed, the embers were extinguished immediately. The membrane revealed a burn spot of roughly 10 millimeters by 20 millimeters.

### Example 3 - Single Burning Item Test

The EPDM membrane of Example 1 was evaluated using the Single Burning Item (SBI) test (EN 13823). The SBI test measures lateral flame spread, rate of heat release, propensity for the production of flaming drips, and rate of smoke production. A sample of the EPDM membrane was mounted to a vertical surface and placed in a hood. After collecting baseline data, a 30 KW flame impinged on the membrane for 21 minutes. The performance of the membrane was evaluated over a 20 minute period on the factors listed above.

### Example 4 - Additional EPDM Rubber Formulas

Additional EPDM rubber formulas are shown in the tables below. The amounts are based on parts per hundred rubber (PHR).

| **Material** | **CAS No.** | L1735 -09-01 | L1735 -09-02 | L1735 -1x-03 | L1735 -19-03 | L1735 -09-04 | L1735 -09-05 | L1735 -09-06 |
|---|---|---|---|---|---|---|---|---|
| EPDM | 25038-36-2 | 100 | 100 | 100 | | 100 | 100 | 100 |
| INFUSE 9010 | 26221-73-8 | | | | | | | |
| Sulfur | 7704-34-9 | 1.1 | 1.1 | | 0.7 | 0.9 | 0.9 | 0.9 |
| TBzTD | 10591-85-2 | | | | 0.24 | 0.28 | 0.28 | 0.28 |
| CBS | 95-33-0 | 0.58 | 0.58 | | 0.8 | | | |
| TBBS | 95-31-8 | | | | | | | |
| Deovulc BG 187 | 68649-42-3, 120-78-5, 102-06-7 | 1.1 | 1.1 | | | | | |
| Peroxide 14S 96% | 25155-25-3 | | | | 0.83 | | | |
| Zinc Oxide | 1314-13-2 | 3 | 3 | 3 | | 3 | 3 | 3 |
| Stearic acid | 57-11-4 | 1 | 1 | 1 | | 1 | 1 | 1 |
| Polyethylene glycol | 25322-68-3 | | | | | | | |
| Resin Escorez 1102 | | | | | | | | |
| maleic anhydride adduct of polybutadien e | | | | | | | | |
| Actigran 70 | 3290-92-4 | | | | | | | |
| Carbofoil L-120 | 12777-87-6 | | | | | | | |
| Carbon black N550 | 1333-86-4 | 30 | 30 | 30 | | 25 | 25 | 20 |
| DINP Diisononyl phthalate | 28553-12-0 | | | | | | | |
| tris(2-ethylhexyl) phosphate | 78-42-2 | | | | | | | |
| WSFR-BDP | >97% 5945-33-5, 3% 115-86-6 | | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | 10 | | | | | |
| Aluminum Hydroxide | 21645-51-2 | 200 | 200 | 200 | | 200 | 200 | 200 |
| MgH | 1309-42-8 | | | | | | | |
| Zinc borate | 138265-88-0 | | | | | | | |
| Calcium Carbonate | 1317-65-3 | | | | | | | |
| TESPT | >50% 24937-78-8, < 50% 40372-72-3 | | | | | | | |
| Silica | 7631-86-9 | | | | | | | 8.5 |
| EPFR-100D | 68333-79-9 | | | | | | | |
| EPFR MPP300 | 218768-84-4 | | | | | | | |
| Sidistar R320U | 69012-64-2 | | | | | | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% | | | | | | | |
| | 66034-17-1, 40% trade secret (phosphoric acid compound) | | | | | | | |
| China clay / Polwhite E | 1332-58-7 | | | | | | | |

| **Material** | **CAS No.** | L1735 -09-07 | L1735 -09-08 | L1735 -19-09 | L1735 -19-10 | L1735 -19-11 | L1735 -09-12 | L1735 -09-13 |
|---|---|---|---|---|---|---|---|---|
| EPDM | 25038-36-2 | 100 | 100 | | | | 100 | 100 |
| INFUSE 9010 | 26221-73-8 | | | | | | | |
| Sulfur | 7704-34-9 | 0.9 | 0.9 | | | 0.3 | 0.9 | 0.9 |
| TBzTD | 10591-85-2 | 0.28 | 0.28 | | | 1.6 | 0.28 | 0.28 |
| CBS | 95-33-0 | | | | | 0.4 | 0.56 | 0.56 |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | 3 | 3 | | | | 3 | 3 |
| Stearic acid | 57-11-4 | 1 | 1 | | | | 1 | 1 |
| Polyethylene glycol | 25322-68-3 | | | | | | | |
| Resin Escorez 1102 | | | | | | | | |
| maleic anhydride adduct of polybutadien e | | | | | | | | |
| Actigran 70% | 3290-92-4 | | | | | | | |
| Carbofoil L-120 | 12777-87-6 | | | | | | | |
| Carbon black N550 | 1333-86-4 | 25 | 25 | | | | 50 | 50 |
| DINP Diisononyl phthalate | 28553-12-0 | | | | | | | |
| tris(2-ethylhexyl) phosphate | 78-42-2 | | | | | | | |
| WSFR-BDP | >97% 5945-33-5, 3% 115-86-6 | | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | 22 | 22 |
| Aluminum Hydroxide | 21645-51-2 | 100 | 100 | | | | 130 | 130 |
| MgH | 1309-42-8 | | | | | | | |
| Zinc borate | 138265-88-0 | | | | | | | |
| Calcium Carbonate | 1317-65-3 | | | | | | | |
| TESPT | >50% 24937-78-8, < 50% 40372-72-3 | | | | | | | |
| Silica | 7631-86-9 | | | | | | | |
| EPFR-100D | 68333-79-9 | 100 | | | | | | |
| EPFR MP300 | 218768-84-4 | | 100 | | | | | |
| Sidistar R320U | 69012-64-2 | | | | | | | |
| Resin Novares TC 100 | 68131-87-1 | | | | | | 3 | 3 |
| Glass fibers FG 400/100 | | | | | | | | 10 |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | | |

| **Material** | **CAS No.** | L1735 -09-14 | L1735 -09-15 | L1735 -09-16 | L1735 -09-17 | L1735 -19-18 | L1735 -19-19 | L1735 -1x-20 |
|---|---|---|---|---|---|---|---|---|
| EPDM | 25038-36-2 | 100 | 100 | 100 | 100 | | | 50 |
| INFUSE 9010 | 26221-73-8 | | | | | | | 50 |
| Sulfur | 7704-34-9 | 0.9 | 0.9 | 0.9 | 0.9 | 0.4 | 1 | |
| TBzTD | 10591-85-2 | 0.28 | 0.28 | 0.28 | 0.28 | 0.4 | 0.8 | |
| CBS | 95-33-0 | 0.56 | 0.56 | 0.56 | 0.56 | 0.4 | 0.8 | |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | 3 | 3 | 3 | 3 | | | 3 |
| Stearic acid | 57-11-4 | 1 | 1 | 1 | 1 | | | 1 |
| Polyethylene glycol | 25322-68-3 | | | | | | | |
| Resin Escorez 1102 | | | | | | | | |
| maleic anhydride adduct of polybutadien e | | | | | | | | |
| Actigran 70 | 3290-92-4 | | | | | | | |
| Carbofoil L-120 | 12777-87-6 | | | | | | | |
| Carbon black N550 | 1333-86-4 | 50 | 25 | 25 | 25 | | | 20 |
| DINP Diisononyl phthalate | 28553-12-0 | | | | | | | |
| tris(2-ethylhexyl) phosphate | 78-42-2 | | | | | | | |
| WSFR-BDP | >97% 5945-33-5, 3% 115-86-6 | | | | | | | |
| WSFR-CDP | 76% 26444-49-5, 12% 26446-73-1, 12% | | | | | | | |
| | 115-86-6, 2% 1330-78-5 | | | | | | | |
| Paraffinic oil | 64742-65-0 | 22 | | | | | | |
| Aluminum Hydroxide | 21645-51-2 | 130 | 100 | | | | | 100 |
| MgH | 1309-42-8 | | | | | | | |
| Zinc borate | 138265-88-0 | | | | | | | |
| Calcium Carbonate | 1317-65-3 | | | | | | | |
| TESPT | >50% 24937-78-8, < 50% 40372-72-3 | | | | | | | |
| Silica | 7631-86-9 | | | | | | | |
| EPFR-100D | 68333-79-9 | | | | 150 | | | 100 |
| EPFR MP300 | 218768-84-4 | | | | | | | |
| Sidistar R320U | 69012-64-2 | | | | | | | |
| Resin Novares TC 100 | 68131-87-1 | 3 | | | | | | |
| Glass fibers FG 400/100 | | | | | | | | |
| Glass fibers FG 600/100 | | 10 | | | | | | |
| ADK STAB FP-2100JC | 60% 66034-17-1, 40% trade secret (phosphori c acid compound) | | 100 | 100 | | | | |
| China clay / Polwhite E | 1332-58-7 | | | 100 | | | | |

| **Material** | **CAS No.** | L1735 -19-20 | L1735 -1x-21 | L1735 -19-21 | L1735 -09-22 | L1735 -09-23 | L1735 -09-24 | L1735 -19-25 |
|---|---|---|---|---|---|---|---|---|
| EPDM | 25038-36-2 | | 75 | | 100 | 100 | 100 | |
| INFUSE 9010 | 26221-73-8 | | 25 | | | | | |
| Sulfur | 7704-34-9 | 0.56 | | 0.83 | 0.9 | 0.9 | 0.9 | |
| TBzTD | 10591-85-2 | 0.22 | | 0.3 | 0.32 | 0.32 | 0.32 | |
| CBS | 95-33-0 | 0.45 | | 0.52 | 0.56 | 0.56 | 0.56 | |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | | 3 | | 3 | 3 | 3 | |
| Stearic acid | 57-11-4 | | 1 | | 1 | 1 | 1 | |
| Polyethylene glycol | 25322-68-3 | | | | 3 | 3 | | |
| Resin Escorez 1102 | | | | | | | | |
| maleic anhydride adduct of polybutadien e | | | | | | | | |
| Actigran 70 | 3290-92-4 | | | | | | | |
| Carbofoil L-120 | 12777-87-6 | | | | 5 | | 40 | |
| Carbon black N550 | 1333-86-4 | | 20 | | | 5 | 20 | |
| DINP Diisononyl phthalate | 28553-12-0 | | | | | 7.5 | 7.5 | |
| tris(2-ethylhexyl) phosphate | 78-42-2 | | | | | | | |
| WSFR-BDP | >97% 5945-33-5, 3% 115-86-6 | | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | | 100 | | 180 | 180 | 160 | |
| MgH | 1309-42-8 | | | | | | | |
| Zinc borate | 138265-88-0 | | | | | | | |
| Calcium Carbonate | 1317-65-3 | | | | | | | |
| TESPT | >50% 24937-78-8, < 50% 40372-72-3 | | | | | | | |
| Silica | 7631-86-9 | | | | 20 | 20 | | |
| EPFR-100D | 68333-79-9 | | 100 | | | | | |
| EPFR MP300 | 218768-84-4 | | | | | | | |
| Sidistar R320U | 69012-64-2 | | | | | | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | | |

| **Material** | **CAS No.** | L1735 -19-26 | L1735 -09-27 | L1735 -09-28 | L1735 -09-29 | L1735 -09-30 | L1735 -19-31 | L1735 -19-32 |
|---|---|---|---|---|---|---|---|---|
| EPDM | 25038-36-2 | | 100 | 100 | 100 | 100 | | |
| INFUSE 9010 | 26221-73-8 | | | | | | | |
| Sulfur | 7704-34-9 | | 0.76 | 0.9 | 0.9 | 0.9 | | 0.4 |
| TBzTD | 10591-85-2 | | 0.27 | 0.32 | 0.32 | 0.32 | | 0.16 |
| CBS | 95-33-0 | | 0.6 | 0.56 | 0.56 | 0.56 | | 0.32 |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | | 3 | 3 | | 3 | | |
| Stearic acid | 57-11-4 | | 1 | 1 | | 1 | | |
| Polyethylene glycol | 25322-68-3 | | | | | | | |
| Resin Escorez 1102 | | | | | | | | |
| maleic anhydride adduct of polybutadien e | | | | | | | | |
| Actigran 70 | 3290-92-4 | | | | | | | |
| Carbofoil L-120 | 12777-87-6 | | | | | | | |
| Carbon black N550 | 1333-86-4 | | 25 | 25 | 25 | 25 | | |
| DINP Diisononyl phthalate | 28553-12-0 | | | | | | | |
| tris(2-ethylhexyl) phosphate | 78-42-2 | | | | | | | |
| WSFR-BDP | >97% 5945-33-5, 3% 115-86-6 | | 16 | 20 | 20 | 20 | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | | 200 | 200 | 200 | 200 | | |
| MgH | 1309-42-8 | | | | | | | |
| Zinc borate | 138265-88-0 | | | | | | | |
| Calcium Carbonate | 1317-65-3 | | | | | | | |
| TESPT | >50% 24937-78- | | | | | | | |
| | 8, < 50% 40372-72-3 | | | | | | | |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | | | | | | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | | |

| **Material** | **CAS No.** | L1735 -09-33 | L1735 -09-34 | L1735 -09-35 | L1735 -09-36 | L1735 -09-37 | L1735 -1x-38 | L1735 -19-38 |
|---|---|---|---|---|---|---|---|---|
| EPDM | 25038-36-2 | 100 | 100 | 100 | 100 | 100 | 100 | |
| INFUSE 9010 | 26221-73-8 | | | | | | | |
| Sulfur | 7704-34-9 | 1.3 | 1 | 1 | 0.9 | 0.9 | | 0.9 |
| TBzTD | 10591-85-2 | 0.48 | 0.4 | 0.4 | 0.32 | 0.32 | | 0.32 |
| CBS | 95-33-0 | 0.88 | 0.6 | 0.6 | 0.56 | 0.56 | | 0.56 |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | 3 | 3 | 3 | 3 | 3 | 3 | |
| Stearic acid | 57-11-4 | 1 | 1 | 1 | 1 | 1 | 1 | |
| Polyethylene glycol | 25322-68-3 | | | | | | | |
| Resin Escorez 1102 | | | | 5 | 5 | 5 | 3 | |
| maleic anhydride adduct of polybutadien e | | | | | | | | |
| Actigran 70 | 3290-92-4 | | | | | | | |
| Carbofoil L-120 | 12777-87-6 | | | | | | | |
| Carbon black N550 | 1333-86-4 | 25 | 25 | 25 | 25 | 25 | 25 | |
| DINP Diisononyl phthalate | 28553-12-0 | | | | | | | |
| tris(2-ethylhexyl) phosphate | 78-42-2 | | | | | | | |
| WSFR-BDP | >97% 5945-33-5, 3% 115-86-6 | 20 | 20 | 20 | 20 | 20 | 15 | 10 |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | 180 | 200 | 200 | 160 | 200 | 100 | 100 |
| MgH | 1309-42-8 | | | | | | | |
| Zinc borate | 138265-88-0 | | | | | | | |
| Calcium Carbonate | 1317-65-3 | | | | | | | |
| TESPT | >50% 24937-78-8, < 50% 40372-72-3 | | | | | | | |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | 20 | | | | | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | | |

| **Material** | **CAS No.** | L1735 -19-39 | L1735 -19-40 | L1735 -09-41 | L1735 -09-42 | L1735 -09-43 | L1735 -09-44 | L1735 -09-45 |
|---|---|---|---|---|---|---|---|---|
| EPDM | 25038-36-2 | | | 100 | 100 | 100 | 100 | 100 |
| INFUSE 9010 | 26221-73-8 | | | | | | | |
| Sulfur | 7704-34-9 | 0.4 | 0.4 | 1.3 | 1.08 | 1.08 | 1.08 | 1.08 |
| TBzTD | 10591-85-2 | 0.24 | 0.24 | 0.49 | 0.4 | 0.4 | 0.4 | 0.4 |
| CBS | 95-33-0 | 0.32 | 0.32 | 0.89 | 0.73 | 0.73 | 0.73 | 0.73 |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | | | 3 | 2.5 | 2.5 | 2.5 | 2.5 |
| Stearic acid | 57-11-4 | | | 1 | 0.83 | 0.83 | 0.83 | 0.83 |
| Polyethylene glycol | 25322-68-3 | | | | | | | |
| Resin Escorez 1102 | | | | | | | | |
| maleic anhydride adduct of polybutadien e | | | | | | | | |
| Actigran 70 | 3290-92-4 | | | | | | | |
| Carbofoil L-120 | 12777-87-6 | | | | | | | |
| Carbon black N550 | 1333-86-4 | | | 24 | 21 | 21 | 21 | 21 |
| DINP Diisononyl phthalate | 28553-12-0 | | | | | | | |
| tris(2-ethylhexyl) phosphate | 78-42-2 | | | | | | | 16.7 |
| WSFR-BDP | >97% 5945-33-5, 3% 115-86-6 | | | 20 | 16.7 | 16.7 | 16.7 | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | | | 165 | 186 | 186 | 186 | 186 |
| MgH | 1309-42-8 | | | | | | | |
| Zinc borate | 138265-88-0 | | | | | | 16.7 | 16.7 |
| Calcium Carbonate | 1317-65-3 | | | | | | | |
| TESPT | >50% 24937-78-8, < 50% 40372-72-3 | | | | | | | 4.17 |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | | | 35 | | | | |
| Resin Novares TC 100 | 68131-87-1 | | | | | | | |
| Glass fibers FG 400/100 | | | | | | | | |
| lass fibers FG 600/100 | | | | | | | | |
| ADK STAB FP-2100JC | 60% | | | | | | | |
| | 66034-17-1, 40% trade secret (phosphoric acid compound) | | | | | | | |
| China clay / Polwhite E | 1332-58-7 | | | | | | | |

| **Material** | **CAS No.** | L1735 -09-46 | L1735 -1x-47 | L1735 -19-47 | L1735 -1x-48 | L1735 -19-48 | L1735 -19-49 | L1735 -19-50 |
|---|---|---|---|---|---|---|---|---|
| EPDM | 25038-36-2 | 100 | 100 | | 100 | | | |
| INFUSE 9010 | 26221-73-8 | | | | | | | |
| Sulfur | 7704-34-9 | 1.08 | 1.08 | 1.3 | | 1.3 | 0.9 | 0.45 |
| TBzTD | 10591-85-2 | 0.4 | 0.4 | 0.48 | | 0.48 | 0.32 | 0.16 |
| CBS | 95-33-0 | 0.73 | 0.73 | 0.88 | | 0.88 | 0.56 | 0.28 |
| TBBS | 95-31-8 | | | | | | | |
| Deovulc BG187 | 68649-42-3, 120-78-5, 102-06-7 | | | | | | | |
| Peroxide 14S 96% | 25155-25-3 | | | | | | | |
| Zinc Oxide | 1314-13-2 | 2.5 | 2.5 | | 3 | | | |
| Stearic acid | 57-11-4 | 0.83 | 0.83 | | 1 | | | |
| Polyethylene glycol | 25322-68-3 | | | | | | | |
| Resin Escorez 1102 | | | | | | | | |
| maleic anhydride adduct of polybutadien e | | | | | | | | |
| Actigran 70 | 3290-92-4 | | | | | | | |
| Carbofoil L-120 | 12777-87-6 | | | | | | | |
| Carbon black N550 | 1333-86-4 | 21 | 21 | | 20 | | | |
| DINP Diisononyl phthalate | 28553-12-0 | | | | | | | |
| tris(2-ethylhexyl) phosphate | 78-42-2 | 16.7 | 16.7 | | 10 | | | |
| WSFR-BDP | >97% 5945-33-5, 3% 115-86-6 | | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | 186 | 186 | | 200 | | | |
| MgH | 1309-42-8 | | | | | | | |
| Zinc borate | 138265-88-0 | 16.7 | 16.7 | | 20 | | | |
| Calcium Carbonate | 1317-65-3 | | | | | | | |
| TESPT | >50% 24937-78-8, < 50% 40372-72-3 | 4.17 | | | | | | |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | | | | | | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | | |

| **Material** | **CAS No.** | L1735 -1x-51 | L1735 -19-51 | L1735 -1x-52 | L1735 -19-52 | L1735 -1x-53 | L1735 -19-53 | L1735 -19-54 |
|---|---|---|---|---|---|---|---|---|
| EPDM | 25038-36-2 | 100 | | 100 | | 100 | | |
| INFUSE 9010 | 26221-73-8 | | | | | | | |
| Sulfur | 7704-34-9 | | 0.45 | | 0.6 | | 0.6 | 0.8 |
| TBzTD | 10591-85-2 | | 0.16 | | 0.16 | | 0.16 | 0.24 |
| CBS | 95-33-0 | | 0.28 | | 0.32 | | 0.32 | 0.48 |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | 3 | | 3 | | 3 | | |
| Stearic acid | 57-11-4 | 1 | | 1 | | 1 | | |
| Polyethylene glycol | 25322-68-3 | | | | | | | |
| Resin Escorez 1102 | | | | | | | | |
| maleic anhydride adduct of polybutadien e | | 2.1 | | 2.8 | | 2.8 | | |
| Actigran 70 | 3290-92-4 | | | | | | | |
| Carbofoil L-120 | 12777-87-6 | | | | | | | |
| Carbon black N550 | 1333-86-4 | 20 | | 20 | | 20 | | |
| DINP Diisononyl phthalate | 28553-12-0 | | | | | | | |
| tris(2-ethylhexyl) phosphate | 78-42-2 | | | 10 | | 10 | | |
| WSFR-BDP | >97% 5945-33-5, 3% 115-86-6 | | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | 200 | | 115 | | 230 | | |
| MgH | 1309-42-8 | | | 115 | | | | |
| Zinc borate | 138265-88-0 | | | | | | | |
| Calcium Carbonate | 1317-65-3 | | | | | 10 | | |
| TESPT | >50% 24937-78-8, < 50% 40372-72-3 | | | | | | | |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | 35 | | | | 25 | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | | |

| **Material** | **CAS No.** | L1735 -1x-55 | L1735 -19-55 | L1735 -19-56 | L1735 -19-57 | L1735 -09-58 | L1735 -09-59 | L1735 -09-60 |
|---|---|---|---|---|---|---|---|---|
| EPDM | 25038-36-2 | 100 | | | | 100 | 100 | 100 |
| INFUSE 9010 | 26221-73-8 | | | | | | | |
| Sulfur | 7704-34-9 | | 0.8 | | | 0.8 | 0.8 | 0.8 |
| TBzTD | 10591-85-2 | | 0.24 | | | 0.24 | 0.24 | 0.24 |
| CBS | 95-33-0 | | | | | | | |
| TBBS | 95-31-8 | | 0.48 | | | 0.48 | 0.48 | 0.48 |
| Deovulc BG 187 | 68649-42-3, 120-78-5, 102-06-7 | | | | | | | |
| Peroxide 14S 96% | 25155-25-3 | | | 3 | | | | |
| Zinc Oxide | 1314-13-2 | 3 | | | | 3 | 3 | 3 |
| Stearic acid | 57-11-4 | 1 | | | | 1 | 1 | 1 |
| Polyethylene glycol | 25322-68-3 | | | | | | | |
| Resin Escorez 1102 | | | | | | | | |
| maleic anhydride adduct of polybutadien e | | 2.8 | | | | 2.8 | 2.8 | 2.8 |
| Actigran 70 | 3290-92-4 | | | 0.75 | | | | |
| Carbofoil L - 120 | 12777-87-6 | | | | | | | |
| Carbon black N550 | 1333-86-4 | 20 | | | | 20 | 20 | 20 |
| DINP Diisononyl phthalate | 28553-12-0 | | | | | | | |
| tris(2-ethylhexyl) phosphate | 78-42-2 | | | | | 10 | 10 | 10 |
| WSFR-BDP | >97% 5945-33-5, 3% 115-86-6 | 20 | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | 230 | | | | 230 | 230 | 230 |
| MgH | 1309-42-8 | | | | | | | |
| Zinc borate | 138265-88-0 | | | | | | | |
| Calcium Carbonate | 1317-65-3 | | | | | 10 | 10 | 10 |
| TESPT | >50% 24937-78-8, < 50% 40372-72-3 | | | | | | | |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | 25 | | | | 10 | 20 | 30 |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | | |

| **Material** | **CAS No.** | L1735 -09-61 | L1735 -09-62 | L1735 -09-63 | L1735 -09-64 | L1735 -09-65 | L1735 -09-66 | L1735 -1x-67 |
|---|---|---|---|---|---|---|---|---|
| EPDM | 25038-36-2 | 100 | 100 | 100 | 100 | 100 | 100 | 100 |
| INFUSE 9010 | 26221-73-8 | | | | | | | |
| Sulfur | 7704-34-9 | 0.8 | 0.8 | 0.8 | 0.8 | 0.8 | 0.8 | |
| TBzTD | 10591-85-2 | 0.24 | 0.24 | 0.24 | 0.24 | 0.24 | 0.24 | |
| CBS | 95-33-0 | | | | | | | |
| TBBS | 95-31-8 | 0.48 | 0.48 | 0.48 | 0.48 | 0.48 | 0.48 | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | 3 | 3 | 3 | 3 | 3 | 3 | 3 |
| Stearic acid | 57-11-4 | 1 | 1 | 1 | 1 | 1 | 1 | 1 |
| Polyethylene glycol | 25322-68-3 | | | | | | | |
| Resin Escorez 1102 | | | | | | | | |
| maleic anhydride adduct of polybutadien e | | 2.8 | 2.8 | 2.8 | 2.8 | 2.8 | 2.8 | 2.8 |
| Actigran 70 | 3290-92-4 | | | | | | | |
| Carbofoil L-120 | 12777-87-6 | | | | | | | |
| Carbon black N550 | 1333-86-4 | 20 | 20 | 20 | 20 | 15 | 10 | 20 |
| DINP Diisononyl phthalate | 28553-12-0 | | | | | | | |
| tris(2-ethylhexyl) phosphate | 78-42-2 | 10 | 10 | 10 | 12.5 | 10 | 10 | 20 |
| WSFR-BDP | >97% 5945-33-5, 3% 115-86-6 | | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | 230 | 230 | 230 | 260 | 260 | 260 | 230 |
| MgH | 1309-42-8 | | | | | | | |
| Zinc borate | 138265-88-0 | | | | | | | |
| Calcium Carbonate | 1317-65-3 | 10 | 10 | 10 | | | | 10 |
| TESPT | >50% 24937-78-8, < 50% 40372-72-3 | | | | | | | |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | 40 | 50 | | 25 | 17.5 | | 25 |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphoric acid compound) | | | | | | | |
| China clay / Polwhite E | 1332-58-7 | | | | | | 30 | |

| **Material** | **CAS No.** | L1735 -19-67 | L1735 -1x-68 | L1735 -19-68 | L1735 -1x-69 | L1735 -19-69 | L1735 -09-70 | L1735 -1x-71 |
|---|---|---|---|---|---|---|---|---|
| EPDM | 25038-36-2 | | 100 | | 100 | | 100 | 100 |
| INFUSE 9010 | 26221-73-8 | | | | | | | |
| Sulfur | 7704-34-9 | 0.8 | | 0.8 | | 0.8 | 0.8 | |
| TBzTD | 10591-85-2 | 0.24 | | 0.24 | | 0.24 | 0.24 | |
| CBS | 95-33-0 | | | | | | | |
| TBBS | 95-31-8 | 0.48 | | 0.48 | | 0.48 | 0.48 | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | | 3 | | 3 | | 3 | 3 |
| Stearic acid | 57-11-4 | | 1 | | 1 | | 1 | 1 |
| Polyethylene glycol | 25322-68-3 | | | | | | | |
| Resin Escorez 1102 | | | | | | | | |
| maleic anhydride adduct of | | | 2.8 | | 2.8 | | 2.8 | 2.8 |
| polybutadien e | | | | | | | | |
| Actigran 70 | 3290-92-4 | | | | | | | |
| Carbofoil L-120 | 12777-87-6 | | | | | | | |
| Carbon black N550 | 1333-86-4 | | 20 | | 20 | | 10 | 10 |
| DINP Diisononyl phthalate | 28553-12-0 | | | | | | | |
| tris(2-ethylhexyl) phosphate | 78-42-2 | | | | | | 20 | 20 |
| WSFR-BDP | >97% 5945-33-5, 3% 115-86-6 | | 20 | | | | | |
| WSFR-CDP | 76% 26444-49-5, 12% 26446-73-1, 12% 115-86-6, 2% 1330-78-5 | | | | 20 | | | |
| Paraffinic oil | 64742-65-0 | | | | | | | |
| Aluminum Hydroxide | 21645-51-2 | | 230 | | 230 | | 260 | 260 |
| MgH | 1309-42-8 | | | | | | | |
| Zinc borate | 138265-88-0 | | | | | | | |
| Calcium Carbonate | 1317-65-3 | | 10 | | 10 | | | |
| TESPT | >50% 24937-78-8, < 50% 40372-72-3 | | | | | | | |
| Silica | 7631-86-9 | | | | | | | |
| EPFR-100D | 68333-79-9 | | | | | | | |
| EPFR MP300 | 218768-84-4 | | | | | | | |
| Sidistar R320U | 69012-64-2 | | 25 | | 25 | | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% 66034-17-1, 40% trade secret (phosphori c acid compound) | | | | | | | |
| China clay / Polwhite E | 1332-58-7 | | | | | | 25 | 30 |

| **Material** | **CAS No.** | L1735 -19-72 | L1735 -09-72 | L1735 -09-73 | L1735 -09-74 | L1735 -09-75 | L1735 -19-76 | L1735 -09-77 |
|---|---|---|---|---|---|---|---|---|
| EPDM | 25038-36-2 | | 100 | 100 | 100 | 100 | | 100 |
| INFUSE 9010 | 26221-73-8 | | | | | | | |
| Sulfur | 7704-34-9 | 0.8 | 0.9 | 0.9 | 0.9 | 0.9 | | 0.9 |
| TBzTD | 10591-85-2 | 0.24 | 0.32 | 0.32 | 0.32 | 0.32 | | 0.32 |
| CBS | 95-33-0 | 0.42 | 0.56 | 0.56 | 0.56 | 0.56 | | 0.56 |
| TBBS | 95-31-8 | | | | | | | |
| Deovulc BG 187 | 68649-42-3, 120-78-5, 102-06-7 | | | | | | | |
| Peroxide 14S 96% | 25155-25-3 | | | | | | | |
| Zinc Oxide | 1314-13-2 | | 3 | 3 | 3 | 3 | | 3 |
| Stearic acid | 57-11-4 | | 1 | 1 | 1 | 1 | | 1 |
| Polyethylene glycol | 25322-68-3 | | | | | | | |
| Resin Escorez 1102 | | | | | | | | |
| maleic anhydride adduct of polybutadien e | | | 2.8 | 2.8 | 2.8 | 2.8 | | 2.8 |
| Actigran 70 | 3290-92-4 | | | | | | | |
| Carbofoil L-120 | 12777-87-6 | | 35 | 35 | 20 | 10 | | 20 |
| Carbon black N550 | 1333-86-4 | | 20 | 20 | 20 | 20 | | 20 |
| DINP Diisononyl phthalate | 28553-12-0 | | | | | | | |
| tris(2-ethylhexyl) phosphate | 78-42-2 | | 20 | 20 | 20 | 20 | | 20 |
| WSFR-BDP | >97% 5945-33-5, 3% 115-86-6 | | | | | | | |
| WSFR-CDP | 76% 26444-49-5, 12% 26446-73-1, 12% 115-86-6, 2% 1330-78-5 | | | | | | | |
| Paraffinic oil | 64742-65-0 | | | | | | | |
| Aluminum Hydroxide | 21645-51-2 | | 170 | 130 | 120 | 200 | | 180 |
| MgH | 1309-42-8 | | | | | | | |
| Zinc borate | 138265-88-0 | | | | | | | |
| Calcium Carbonate | 1317-65-3 | | | | | | | |
| TESPT | >50% 24937-78-8, < 50% 40372-72-3 | | | | | | | |
| Silica | 7631-86-9 | | | | | | | |
| EPFR-100D | 68333-79-9 | | | 80 | 120 | | | |
| EPFR MP300 | 218768-84-4 | | | | | | | |
| Sidistar R320U | 69012-64-2 | | | | | | | |
| Resin Novares TC 100 | 68131-87-1 | | | | | | | |
| Glass fibers FG 400/100 | | | | | | | | |
| Glass fibers FG 600/100 | | | | | | | | |
| ADK STAB FP-2100JC | 60% | | | | | | | |
| | 66034-17-1, 40% trade secret (phosphoric acid compound) | | | | | | | |
| China clay / Polwhite E | 1332-58-7 | | | | | | | |

| **Material** | **CAS No.** | **84970-09-03** |
|---|---|---|
| EPDM | 25038-36-2 | 100 |
| INFUSE 9010 | 26221-73-8 | |
| Sulfur | 7704-34-9 | 0.9 |
| TBzTD | 10591-85-2 | 0.32 |
| CBS | 95-33-0 | 0.56 |
| TBBS | 95-31-8 | |
| Deovulc BG 187 | 68649-42-3, 120-78-5, 102-06-7 | |
| Peroxide 14S 96% | 25155-25-3 | |
| Zinc Oxide | 1314-13-2 | 3 |
| Stearic acid | 57-11-4 | 1 |
| Polyethylene glycol | 25322-68-3 | |
| Resin Escorez 1102 | | |
| maleic anhydride adduct of polybutadiene | | 2.8 |
| Actigran 70 | 3290-92-4 | |
| Carbofoil L-120 | 12777-87-6 | 20 |
| Carbon black N550 | 1333-86-4 | 20 |
| DINP Diisononyl phthalate | 28553-12-0 | |
| tris(2-ethylhexyl) phosphate | 78-42-2 | 20 |
| WSFR-BDP | >97% 5945-33-5, 3% 115-86-6 | |
| WSFR-CDP | 76% 26444-49-5, 12% 26446-73-1, 12% 115-86-6, 2% 1330-78-5 | |
| Paraffinic oil | 64742-65-0 | |
| Aluminum Hydroxide | 21645-51-2 | 180 |
| MgH | 1309-42-8 | |
| Zinc borate | 138265-88-0 | |
| Calcium Carbonate | 1317-65-3 | |
| TESPT | >50% 24937-78-8, < 50% 40372-72-3 | |
| Silica | 7631-86-9 | |
| EPFR-100D | 68333-79-9 | |
| EPFR MP300 | 218768-84-4 | |
| Sidistar R320U | 69012-64-2 | |
| Resin Novares TC 100 | 68131-87-1 | |
| Glass fibers FG 400/100 | | |
| Glass fibers FG 600/100 | | |
| ADK STAB FP-2100JC | 60% 66034-17-1, 40% trade secret (phosphoric acid compound) | |
| China clay / Polwhite E | 1332-58-7 | |

### Example 5 - Evaluation of the Formulations

Select formulations from Example 4 were evaluated for physical properties and preliminary flame resistance testing. The results are summarized in the tables below ("MR" is the minimum requirement).

| **Property** | **Unit** | **MR** | **L1735-09-01** | **L1735-09-02** | **L1735-19-03** | **L1735-09-04** |
|---|---|---|---|---|---|---|
| Vulcanizing | | | 22h/135°C RH oven | 22h/135°C RH oven | 22h/135°C RH oven | 22h/135°C RH oven |
| Rheo 3'/190°C | ML | | 1.45 | 0.99 | 2.92 | 1.27 |
| Thickness | mm | | 0.70 | 0.73 | 0.72 | 0.61 |
| Density | kg/l | | 1.4707 | 1.4409 | 1.484 | 1.490 |
| Hardness | °Sh A | | 72 | 70 | 75 | 77 |
| Tensile strength S3 | Mpa | > 3 | 4.3 | 3.7 | 3.3 | 4.7 |
| Elongation at break | % | > 200 | 406 | 404 | 247 | 427 |
| Tear resistance trouser | N/mm | > 6 | 4.2 | 3.1 | 4.4 | 4.9 |
| Aging | | | 7d/100°C | 7d/100°C | 7d/100°C | 7d/100°C |
| Hardness | °Sh A | | 75 | 75 | 78 | |
| Tensile strength S3 | Mpa | > 3 | 3.7 | 3.8 | 3.9 | |
| Elongation at break | % | > 200 | 319 | 298 | 248 | |
| | | | | | | |
| 0.6 mm class E free hanging | s | > 30 | 0.70 mm | 0.73 mm | | |
| | | | no flame | 59 | | |
| 0.6 mm Class B free hanging | s | > 60 | 0.74 mm | 0.73 mm | | |
| | | | 63 | 45 | | |
| | | | | | | |
| result class E | | > 30 | 0.70 mm | 0.73 mm | | |
| | | | no flame | 62 | | |
| | | | | 0.72 mm | | |
| | | | | 56 | | |
| | | | | | | |
| result Class B | | > 60 | 0.74 mm | 0.73 mm | | |
| | | | 1:04 limit | 50 | | |
| | | | 0.70 mm | 0.74 mm | | |
| | | | 1:08 limit | 40 | | |
| | | | 0.77 mm | 0.72 mm | | |
| | | | 56 | 46 | | |

| **Property** | **Unit** | **MR** | **L1735-09-04** | **L1735-09-05** | **L1735-09-05** |
|---|---|---|---|---|---|
| Vulcanizing | | | Press plate 1 mm | 22h/135°C RH oven | Press plate 1 mm |
| | | | 2h/170°C | | 2h/170°C |
| Rheo 3'/190°C | ML | | 1.27 | 1.75 | |
| Thickness | mm | | | | |
| Density | kg/l | | 1.519 | 1.491 | 1.522 |
| Hardness | °Sh A | | 88 | 77 | 88 |
| Tensile strength S3 | Mpa | > 3 | 5.9 | 4.7 | 6.1 |
| Elongation at break | % | > 200 | 557 | 420 | 612 |
| Tear resistance trouser | N/mm | > 6 | 11.0 | 5.4 | 14.1 |
| Aging | | | 7d/100°C | 7d/100°C | 7d/100°C |
| Hardness | °Sh A | | X | 78 | X |
| Tensile strength S3 | Mpa | > 3 | X | 4.7 | X |
| Elongation at break | % | > 200 | X | 330 | X |
| | | | | | |
| 0.6 mm class E free hanging | | | | | |
| 0.6 mm Class B free hanging | | | | | |
| | | | | | |
| result class E | | | | | |
| | | | | | |
| | | | | | |
| result Class B | | | | | |

| **Property** | **Unit** | **MR** | **L1735-09-05** | **L1739-09-08** |
|---|---|---|---|---|
| Vulcanizing | | | Press plate 1 mm | Press plate 1 mm |
| | | | 2h/170°C | 2h/170°C |
| Rheo 3'/190°C | ML | | | 2.56 |
| Thickness | mm | | | |
| Density | kg/l | | | |
| Hardness | °Sh A | > 3 | | |
| Tensile strength S3 | Mpa | > 200 | | |
| Elongation at break | % | > 6 | | |
| Tear resistance trouser | N/mm | | | |
| Aging | | | 7d/100°C | 7d/100°C |
| Hardness | °Sh A | | | |
| Tensile strength S3 | Mpa | > 3 | | |
| Elongation at break | % | > 200 | | |
| | | | | |
| 0.6 mm class E free hanging | | | | |
| 0.6 mm Class B free hanging | | | | |
| | | | | |
| result class E | | | | |
| | | | | |
| | | | | |
| result Class B | Thickness mm | | 1.13 | 1.11 |
| | 150 mm height flame | > 60 | 90s | 40 s extinguish |

| **Property** | **Unit** | **MR** | **L1735-09-05** | **L1735-09-06** | **L1735-09-07** | **L1739-09-08** |
|---|---|---|---|---|---|---|
| Vulcanizing | | | 22h/135°C hot air oven | 22h/135°C hot air oven | 22h/135°C hot air oven | 22h/135°C hot air oven |
| Rheo 3'/190°C | ML | | 1.75 | 2.85 | 1.57 | 2.56 |
| Thickness | mm | | | | | |
| Density | kg/l | | 1.475 | 1.495 | 1.413 | 1.399 |
| Hardness | °Sh A | | 79 | 77 | 77 | 78 |
| Tensile strength S3 | Mpa | > 3 | 5.2 | 4.9 | 2.4 | 2.9 |
| Elongation at break | % | > 200 | 451 | 555 | 585 | 469 |
| Tear resistance trouser | N/mm | > 6 | 4.3 | 8.2 | 7.5 | 7.5 |
| Aging | | | 7d/100°C | 7d/100°C | 7d/100°C | 7d/100°C |
| Hardness | °Sh A | | | | | |
| Tensile strength S3 | Mpa | > 3 | | | | |
| Elongation at break | % | > 200 | | | | |
| | | | | | | |
| 0.6 mm class E free hanging | | | | | | |
| 0.6 mm Class B free hanging | | | | | | |
| | | | | | | |
| result class E | | | | | | |
| | | | | | | |
| | | | | | | |
| result Class B | Thickness mm | | 0.65 | 0.63 | 0.64 | 0.60 |
| | 150 mm height flame | > 60 | 50s | 50s | extinguish 10 s after removal flame | 60 s |
| | | | | | At 20 minutes flame under foil, no extinguish able spread of flame and extinguish immediatel y after flame removal | |

| **Property** | **Unit** | **MR** | **L1735-19-09** | **L1735-19-10** | **L1735-09-07** | **L1735-19-11** |
|---|---|---|---|---|---|---|
| Vulcanizing | | | 22h/135°C hot air oven | 22h/135°C hot air oven | 22h/135°C hot air oven | 22h/135°C hot air oven |
| Rheo 3'/190°C | ML | | | | | |
| Thickness | mm | | 0.80 | 0.71 | | |
| Density | kg/l | | 1.457 | 1.441 | | 1.400 |
| Hardness | °Sh A | | 79 | 79 | | 80 |
| Tensile strength S3 | Mpa | > 3 | 4 | 3.9 | | 3.9 |
| Elongation at break | % | > 200 | 500 | 495 | | 441 |
| Tear resistance trouser | N/mm | > 6 | 10.5 | 9.3 | | 4.7 |
| Aging | | | 7d/100°C | 7d/100°C | 7d/100°C | 7d/100°C |
| Hardness | °Sh A | | | | | 81 |
| Tensile strength S3 | Mpa | > 3 | | | | 4.4 |
| Elongation at break | % | > 200 | | | | 384 |
| | | | | | | |
| 0.6 mm class E free hanging | | | | | | |
| 0.6 mm Class B free hanging | | | | | | |
| | | | | | | |
| result class E | | | | | | |
| | | | | | | |
| | | | | | | |
| result Class B | Thickness mm | | 0.80 | 0.71 | 0.72 | 0.72 |
| | 150 mm height flame | > 60 | 55 s | extinguish at 35 s | immediately extinguish at 35 s removing flame | reaches the line of 150 mm at 55 s |
| | | | | With continuous flame at 65 seconds, 150 mm is reached | | |

| **Property** | **Unit** | **MR** | **L1735-09-12** | **L1735-09-13** | **L1735-09-14** |
|---|---|---|---|---|---|
| Vulcanizing | | | 22h/135°C hot air oven | 22h/135°C hot air oven | 22h/135°C hot air oven |
| Rheo 3'/190°C | ML | | 0.93 | 1.01 | 1.01 |
| Thickness | mm | | | | |
| Density | kg/l | | 1.332 | 1.340 | 1.339 |
| Hardness | °Sh A | | 70 | 72 | 72 |
| Tensile strength S3 | Mpa | > 3 | 6.4 | 5.4 | 5.4 |
| Elongation at break | % | > 200 | 465 | 417 | 420 |
| Tear resistance trouser | N/mm | > 6 | 7.5 | 6.5 | 5.8 |
| Aging | | | 7d/100°C | 7d/100°C | 7d/100°C |
| Hardness | °Sh A | | 70 | 74 | 74 |
| Tensile strength S3 | Mpa | > 3 | 5.7 | 5.2 | 5.2 |
| Elongation at break | % | > 200 | 394 | 356 | 349 |
| | | | | | |
| 0.6 mm class E free hanging | | > 30 | | | |
| 0.6 mm Class B free hanging | | > 60 | | | |
| | Thickness mm | | 0.70 | 0.73 | 0.61 |
| result class E | length cross | > 30 | 26 s | 30 s | 32 s |
| | | | 30 s | 32 s | 32 s |
| | | | | | |
| result Class B | Thickness mm | | | | |
| | 150 mm height flame | | | | |

| **Property** | **Unit** | **MR** | **L1735-19-15** | **L1735-19-16** | **L1735-09-17** | **L1735-19-18** |
|---|---|---|---|---|---|---|
| Vulcanizing | | | 22h/135°C hot air oven | 22h/135°C hot air oven | 22h/135°C hot air oven | 22h/135°C hot air oven |
| Rheo 3'/190°C | ML | | | | 2.00 | |
| Thickness | mm | | 0.68 | 0.68 | 0.72 | |
| Density | kg/l | | 1.386 | 1.409 | 1.272 | |
| Hardness | °Sh A | | 77 | 80 | 74 | |
| Tensile strength S3 | Mpa | > 3 | 4.0 | 3.9 | 2.0 | |
| Elongation at break | % | > 200 | 420 | 398 | 596 | |
| Tear resistance trouser | N/mm | > 6 | 4.2 | 7.2 | 10.0 | |
| Aging | | | 7d/100°C | 7d/100°C | 7d/100°C | 7d/100°C |
| Hardness | °Sh A | | 80 | 84 | 78 | |
| Tensile strength S3 | Mpa | > 3 | 3.8 | 3.9 | 1.9 | |
| Elongation at break | % | > 200 | 375 | 345 | 285 | |
| | | | | | | |
| 0.6 mm class E free hanging | s | > 30 | | | | |
| 0.6 mm Class B free hanging | s | > 60 | | | | |
| | | | | | | |
| result class E | | | | | | |
| result Class B | Thickness mm | | 0.68 | 0.67 | 0.72 | |
| | | | 0.67 | 0.70 | 0.73 | |
| | 150 mm height flame | > 60 | 45 s extinguish | 35 s | after 30s flame extinguish immediately | |
| | | | | 35 s | | |
| | | | 45 s | | | |
| result Class B | Thickness mm | | About vulcanized 0.70 mm | | | |
| | 150 mm height flame | | 55 s, slightly better so as a vulcanized flame also seems less intense | | | |

| **Property** | **Unit** | **MR** | **L1735-19-20** | **L1735-19-21** | **L1735-09-22** | **L1735-09-23** |
|---|---|---|---|---|---|---|
| Vulcanizing | | | 22h/135°C hot air oven | 22h/135°C hot air oven | 22h/135°C hot air oven | 22h/135°C hot air oven |
| Rheo 3'/190°C | ML | | | | 3.39 | 3.44 |
| Thickness | mm | | | | | |
| Density | kg/l | | 1.422 | 1.450 | 1.463 | 1.447 |
| Hardness | °Sh A | | 81 | 81 | 79 | 74 |
| Tensile strength S3 | Mpa | > 3 | 2.2 | 2.1 | 5.3 | 5.6 |
| Elongation at break | % | > 200 | 17 | 134 | 605 | 577 |
| Tear resistance trouser | N/mm | > 6 | 10.5 | 7.4 | 10.6 | 7.7 |
| Aging | | | 7d/100°C | 7d/100°C | 7d/100°C | 7d/100°C |
| Hardness | °Sh A | | X | X | | |
| Tensile strength S3 | Mpa | >3 | X | X | | |
| Elongation at break | % | > 200 | X | X | | |
| | | | | | | |
| 1.0 mm Class B free hanging | Thick-ness mm | | | | 0.99 | 0.95 |
| | time | > 60 | | | 90 s | 55 s |
| | | | | | 55 s | 65 s |
| | | | | | 1 mm pers | 1 mm pers |
| | | | | | 15'/170°C | 15'/170°C |
| small burning test 30/30 | Thick-ness mm | | 0.68 | 0.72 | 1.05 | 1.15 |
| | 150 mm height flame | > 60 | 33 | 46 | 90 seconds at the mark | 150 second extinguish. Was very small flame |
| | | | 46 | 49 | | |
| result Class B | Thick-ness mm | | | this property also tested unvulcanized on fire. Curls up strongly and burns too | | |

| **Property** | **Unit** | **MR** | **L1735-09-24** | **L1735-19-25** | **L1735-19-26** |
|---|---|---|---|---|---|
| Vulcanizing | | | 22h/135°C hot air oven | 22h/135°C hot air oven | 22h/135°C hot air oven |
| Rheo 3'/190°C | ML | | 0.76 | | |
| Thickness | mm | | | | |
| Density | kg/l | | 1.401 | 1.402 | 1.436 |
| Hardness | °Sh A | | 73 | 77 | 77 |
| Tensile strength S3 | Mpa | > 3 | 2.1 | 2.6 | 2.8 |
| Elongation at break | % | > 200 | 278 | 329 | 371 |
| Tear resistance trouser | N/mm | > 6 | 3.7 | 6.1 | 6.2 |
| Aging | | | 7d/100°C | 7d/100°C | 7d/100°C |
| Hardness | °Sh A | | X | X | X |
| Tensile strength S3 | Mpa | > 3 | X | X | X |
| Elongation at break | % | > 200 | X | X | X |
| | | | | | |
| 1.0 mm Class B free hanging | Thickness mm | | 1.00 | 1.14 | 1.10 |
| | | | | 1.18 | 1.08 |
| | time | > 60 | after 30 s direct extinguish | drip 70s top 100s | drip no top 100s |
| | | | | drip no top 90s | drip 60s top 110s |
| | | | 1 mm pers | 1 mm pers | |
| | | | 15'/170°C | 15'/170°C | |
| result Class B | Thickness mm | | 1.10 | 1.10 | 1.10 |
| | 150 mm height flame | | immediately extinguish after 30S | after 40s extinguish very small flame | after 110s extinguish very small flame |

| **Property** | **Unit** | **MR** | **L1735-09-27** | **L1735-09-28** | **L1735-09-29** | **L1735-09-30** | **L1735-19-31** |
|---|---|---|---|---|---|---|---|
| Vulcanizing | | | 22h/135° C hot air oven | 22h/135° C hot air oven | 22h/135° C hot air oven | 22h/135° C hot air oven | 22h/135° C hot air oven |
| Rheo 3'/190°C | ML | | 1.25 | 1.70 | 1.81 | 1.95 | |
| Thickness | mm | | | | | | |
| Density | kg/l | | 1.490 | 1.491 | 1.483 | 1.492 | 1.482 |
| Hardness | °Sh A | | 79 | 80 | 78 | 77 | 79 |
| Tensile strength S3 | Mpa | > 3 | 3.5 | 3.3 | 2.7 | 2.9 | 3.4 |
| Elongation at break | % | > 200 | 383 | 550 | 524 | 584 | 507 |
| Tear resistance trouser | N/mm | > 6 | 3.3 | 9.8 | 12.9 | 8.9 | 12.2 |
| Aging | | | 7d/100°C | 7d/100°C | 7d/100°C | 7d/100°C | 7d/100°C |
| Hardness | °Sh A | | X | X | | | |
| Tensile strength S3 | Mpa | > 3 | X | X | | | |
| Elongation at break | % | > 200 | X | X | | | |
| | | | | | | | |
| 1.0 mm Class B free hanging | Thick-ness mm | | 1.05 | 1.02 | 1.02 | 1.05 | 0.95 |
| | | | | 1.05 | 1.02 | 1.05 | 0.95 |
| | time | > 60 | 70 s | 88 s | 100s | 70s | 49s |
| | | | 70 s | 90 s | 90s | 80s | 54s |
| | | | no drip | no drip | no drip | no drip | no drip |
| | | | 1 mm pers | 1 mm pers | | | |
| | | | 15'/170° C | 15'/170° C | | | |
| result Class B | Thickne ss mm | | 1.15 | | | | |
| | 150 mm height flame | | na 110 s top no drip | | | | |

| **Property** | **Unit** | **MR** | **L1735-19-32** | **L1735-09-33** | **L1735-09-34** | **L1735-09-35** |
|---|---|---|---|---|---|---|
| Vulcanizing | | | 22h/135°C hot air oven | 22h/135° C hot air oven | | |
| Rheo 3'/190°C | ML | | | 1.85 | 2.56 | 2.4 |
| Thickness | mm | | | | | |
| Density | kg/l | | 1.474 | 1.470 | | |
| Hardness | °Sh A | | 78 | 82 | | |
| Tensile strength S3 | Mpa | > 3 | 4.4 | 4.9 | | |
| Elongation at break | % | > 200 | 525 | 443 | | |
| Tear resistance trouser | N/mm | > 6 | 8.3 | 8.0 | | |
| Aging | | | 7d/100°C | 7d/100°C | 7d/100°C | 7d/100°C |
| Hardness | °Sh A | | 83 | 84 | | |
| Tensile strength S3 | Mpa | > 3 | 4.1 | 4.6 | | |
| Elongation at break | % | > 200 | 465 | 399 | | |
| | | | No drip | No drip | | |
| 1.0 mm Class B free hanging | Thick-ness mm | | 1.08 | 1.08 | | |
| | | | 1.05 | 1.06 | | |
| | Time s | | 90 | 90 | | |
| | | | 80 | 80 | | |
| | | | No drip | No drip | | |

| **Property** | **Unit** | **MR** | **L1735-09-36** | **L1735-09-37** | **L1735-19-38** | **L1735-09-39** |
|---|---|---|---|---|---|---|
| Vulcanizing | | | 22h/135°C hot air oven | 22h/135° C hot air oven | 22h/135° C hot air oven | 22h/135° C hot air oven |
| Rheo 3'/190°C | ML | | 1.32 | 1.53 | 1.34 | 1.2 |
| Thickness | mm | | 1.00 | 0.95 | | |
| Density | kg/l | | 1.413 | 1.473 | 1.476 | 1.465 |
| Hardness | °Sh A | | 78 | 76 | 73 | 73 |
| Tensile strength S3 | Mpa | > 3 | 3.8 | 3.2 | 2.3 | 3.3 |
| Elongation at break | % | > 200 | 554 | 577 | 606 | 519 |
| Tear resistance trouser | N/mm | > 6 | 9.7 | 9.3 | 6.4 | 7.6 |
| Aging | | | 7d/100°C | 7d/100°C | 7d/100°C | 7d/100°C |
| Hardness | °Sh A | | 81 | 83 | 80 | 80 |
| Tensile strength S3 | Mpa | > 3 | 3.9 | 3.3 | 2.7 | 3.7 |
| Elongation at break | % | > 200 | 493 | 506 | 540 | 467 |
| | | | | | | |
| 1.0 mm Class B free hanging | Thickness mm | | 1.00 | 0.95 | 0.95 | 1.05 |
| | | | 1.00 | 0.97 | | |
| | Time s | | 55 s | 70 s | 80 s | 80 s |
| | | | 55 s | 65 s | 60s | 84 s |
| | | | no drip | no drip | no drip | no drip |

| **Property** | **Unit** | **MR** | **L1735-09-40** | **84970-19-01** | **L1735-09-41** |
|---|---|---|---|---|---|
| Vulcanizing | | | 22h/135°C hot air oven | 22h/135°C hot air oven | 22h/135°C hot air oven |
| Rheo 3'/190°C | ML | | | | |
| Thickness | mm | | | | |
| Density | kg/l | | | 1.512 | 1.474 |
| Hardness | °Sh A | | 80 | 80 | 85 |
| Tensile strength S3 | Mpa | > 3 | 4.0 | 3.5 | 3.1 |
| Elongation at break | % | > 200 | 381 | 425 | 310 |
| Tear resistance trouser | N/mm | > 6 | 4.8 | 4.9 | 3.6 |
| Aging | | | 7d/100°C | 7d/100°C | 7d/100°C |
| Hardness | °Sh A | | | | 87 |
| Tensile strength S3 | Mpa | > 3 | | 3.5 | 4.3 |
| Elongation at break | % | > 200 | | 355 | 334 |
| | | | | | |
| 1.0 mm Class B free hanging | Thickness mm | | | 1.10 | 1.00 |
| | | | | 1.10 | 1.00 |
| | Time s | | | 100 s | 79 s |
| | | | | 100 s | 68 s |

| **Property** | **Unit** | **MR** | **L1735-09-42** | **L1735-09-43** | **L1735-09-44** | **L1735-09-45** |
|---|---|---|---|---|---|---|
| Vulcanizing | | | 22h/135°C hot air oven | 22h/135° C hot air oven | 22h/135° C hot air oven | 22h/135° C hot air oven |
| Rheo 3'/190°C | ML | | | | | |
| Thickness | mm | | | | | |
| Density | kg/l | | 1.417 | 1.390 | 1.435 | 1.421 |
| Hardness | °Sh A | | 80 | 70 | 72 | 72 |
| Tensile strength S3 | Mpa | > 3 | 3.6 | 4.0 | 3.8 | 3.8 |
| Elongation at break | % | > 200 | 469 | 318 | 300 | 308 |
| Tear resistance trouser | N/mm | > 6 | 7.8 | 1.2 | 1.3 | 1.3 |
| Aging | | | 7d/100°C | 7d/100°C | 7d/100°C | 7d/100°C |
| Hardness | °Sh A | | 80 | 70 | 73 | 72 |
| Tensile strength S3 | Mpa | > 3 | 3.7 | 2.5 | 3.4 | 3.5 |
| Elongation at break | % | > 200 | 436 | 209 | 278 | 270 |
| | | | | | | |
| 1.0 mm Class B free hanging | Thickness mm | | 1.11 | 1.10 | 1.00 | 1.03 |
| | | | 1.15 | 1.09 | 1.01 | 1.01 |
| | Time s | | 70 | 54 | 55 | 45 |
| | | | 75 | 45 | 65 | 45 |

| **Property** | **Unit** | **MR** | **L1735-09-46** | **L1735-19-47** | **L1735-19-48** | **L1748-19-49** |
|---|---|---|---|---|---|---|
| Vulcanizing | | | 22h/135°C hot air oven | 22h/135° C hot air oven | 22h/135° C hot air oven | 22h/135° C hot air oven |
| Rheo 3'/190°C | ML | | | | | |
| Thickness | mm | | | | | |
| Density | kg/l | | 1.417 | 1.419 | 1.503 | 1.504 |
| Hardness | °Sh A | | 69 | 71 | 79 | 79 |
| Tensile strength S3 | Mpa | > 3 | 2.8 | 3.2 | 4.8 | 4.7 |
| Elongation at break | % | > 200 | 282 | 308 | 274 | 303 |
| Tear resistance trouser | N/mm | > 6 | 1.0 | 1.1 | 2.3 | 2.9 |
| Aging | | | 7d/100°C | 7d/100°C | 7d/100°C | 7d/100°C |
| Hardness | °Sh A | | 70 | 71 | 80 | 80 |
| Tensile strength S3 | Mpa | > 3 | 2.7 | 3.1 | 3.8 | 3.9 |
| Elongation at break | % | > 200 | 257 | 287 | 241 | 283 |
| | | | | | | |
| 1.0 mm Class B free hanging | Thickness mm | | 0.98 | 0.98 | 1.00 | 1.00 |
| | | | 0.98 | 0.96 | 0.98 | 1.00 |
| | | | 0.98 | | | |
| | Time s | | 45 | 45 | 80 | 80 |
| | | | 52 | 53 | 78 | 83 |

| **Property** | **Unit** | **MR** | **L1735-19-50** | **L1735-19-51** | **L1735-19-52** | **L1735-19-54** |
|---|---|---|---|---|---|---|
| Vulcanizing | | | 22h/135°C hot air oven | 22h/135° C hot air oven | 22h/135° C hot air oven | 22h/135° C hot air oven |
| Rheo 3'/190°C | ML | | | | | 1.95 |
| Thickness | mm | | | | | |
| Density | kg/l | | 1.500 | 1.523 | 1.494 | 1.553 |
| Hardness | °Sh A | | 79 | 85 | 79 | 85 |
| Tensile strength S3 | Mpa | > 3 | 5.7 | 3.9 | 2.9 | 3.8 |
| Elongation at break | % | > 200 | 517 | 60 | 544 | 309 |
| Tear resistance trouser | N/mm | > 6 | 10.9 | 13.9 | 12.6 | 13.3 |
| Aging | | | 7d/100°C | 7d/100°C | 7d/100°C | 7d/100°C |
| Hardness | °Sh A | | 81 | 86 | 82 | 86 |
| Tensile strength S3 | Mpa | > 3 | 5 | 4.2 | 2.2 | 4.1 |
| Elongation at break | % | > 200 | 472 | 55 | 257 | 122 |
| | | | | | | |
| 1.0 mm Class B free hanging | Thickness mm | | 1.02 | 0.97 | 1.07 | 1.14 |
| | | | 1.02 | 0.97 | 1.07 | 1.11 |
| | Time s | | 85 | 78 | 82 | 88 |
| | | | 83 | 80 | 84 | 88 |

| **Property** | **Unit** | **MR** | **L1735-19-55** | **L1735-19-56** | **L1735-19-57** |
|---|---|---|---|---|---|
| | | | Sulfur | Peroxide | Peroxide |
| Rheo 3'/190°C | ML | | | | |
| Thickness | mm | | | | |
| Density | kg/l | | 1.541 | | 1.542 |
| Hardness | °Sh A | | 87 | | 79 |
| Tensile strength S3 | Mpa | > 3 | 2.9 | | 1.6 |
| Elongation at break | % | > 200 | 28 | | 20 |
| Tear resistance trouser | N/mm | > 6 | 13.9 | | 9.3 |
| Aging | | | 7d/100°C | 7d/100°C | 7d/100°C |
| Hardness | °Sh A | | 86 | | 82 |
| Tensile strength S3 | Mpa | > 3 | 3.3 | | 2.3 |
| Elongation at break | % | > 200 | 28 | | 24 |
| | | | | | |
| 1.0 mm Class B free hanging | Thickness mm | | 1.05 | | 1.12 |
| | | | 1.05 | | 1.12 |
| | Time s | | 110 | | 80 |
| | | | 84 | | 108 |
| | | | 97 | | 94 |

| **Property** | **Unit** | **MR** | **L1735-09-58** | **L1735-09-59** | **L1735-09-60** | **L1735-09-61** |
|---|---|---|---|---|---|---|
| | | | 10 phr TOF | 10 phr TOF | 10 phr TOF | 10 phr TOF |
| | | | 10 phr Sidistar | 20 phr Sidistar | 30 phr Sidistar | 40 phr Sidistar |
| Rheo 3'/190°C | ML | | 1.87 | 1.99 | 2.20 | 2.34 |
| Thickness | mm | | | | | |
| Density | kg/l | | 1.538 | 1.548 | 1.563 | 1.575 |
| Hardness | °Sh A | | 83 | 85 | 87 | 87 |
| Tensile strength S3 | Mpa | > 3 | 4.1 | 4.0 | 3.8 | 4.0 |
| Elongation at break | % | > 200 | 407 | 258 | 37 | 39 |
| Tear resistance trouser | N/mm | > 6 | 15.1 | 15.5 | 14.6 | 13.1 |
| Aging | | | 7d/100°C | 7d/100°C | 7d/100°C | 7d/100°C |
| Hardness | °Sh A | | 85 | 86 | 87 | 88 |
| Tensile strength S3 | Mpa | > 3 | 3.9 | 4 | 4.2 | 4.4 |
| Elongation at break | % | > 200 | 161 | 233 | 36 | 38 |
| | | | | | | |
| 1.0 mm Class B free hanging | Thickness mm | | 1.04 | 1.03 | 1.02 | 1.08 |
| | | | 1.03 | 1.04 | 0.98 | 1.09 |
| | Time s | | 63 | 73 | 81 | 85 |
| | | | 73 | 73 | 78 | 86 |
| | | average | 68 | 73 | 80 | 86 |

| **Property** | **Unit** | **MR** | **L1735-09-62** | **L1735-09-63** | **L1735-09-64** | **L1735-09-65** |
|---|---|---|---|---|---|---|
| | | | 10 phr TOF | 10 phr TOF | 25 phr Sidistar | 17.5 phr Sidistar, 15 phr N330 ipv 20 and 10 phr TOF |
| | | | 50 phr Sidistar | 0 phr Sidistar | 12.5 phr TOF | |
| Rheo 3'/190°C | ML | | 2.62 | 1.62 | 2.19 | 1.93 |
| Thickness | mm | | | | | |
| Density | kg/l | | 1.576 | 1.523 | 1.566 | 1.5586 |
| Hardness | °Sh A | | 88 | 84 | 86 | 86 |
| Tensile strength S3 | Mpa | > 3 | 3.8 | 3.9 | 3.95 | 3.9 |
| Elongation at break | % | > 200 | 37 | 405 | 39 | 34 |
| Tear resistance trouser | N/mm | > 6 | 11.6 | 13.6 | 13.9 | 14.1 |
| Aging | | | 7d/100°C | 7d/100°C | 7d/100°C | 7d/100°C |
| Hardness | °Sh A | | 88 | 85 | 87 | 87 |
| Tensile strength S3 | Mpa | > 3 | 4.3 | 3.7 | 4.7 | 3.7 |
| Elongation at break | % | > 200 | 38 | 257 | 38 | 34 |
| | | | | | | |
| 1.0 mm Class B free hanging | Thickness mm | | 1.08 | 1.02 | 0.96 | 0.98 |
| | | | | | 0.98 | 1.00 |
| | | | 1.08 | 1.02 | | |
| | Time s | | 81 | 65 | 78 | 88 |
| | | | 88 | 80 | 90 | 86 |
| | | | 85 | 73 | 84 | 87 |

| **Property** | **Unit** | **MR** | **L1735-09-66** | **L1735-19-67** | **L1735-19-68** | **L1735-19-69** |
|---|---|---|---|---|---|---|
| | | | 30 phr Polwhite | L1735-19-54 with 20 phr TOF | L1735-19-54 with 20 phr BDP | L1735-19-54 with 20 phr CDP |
| | | | 0 phr Sidistar | | | |
| | | | 10 phr TOF 10 phr N330 | | | |
| Vulcanizing | | | 22h/135°C boiler | 22h/135° C boiler | 22h/135° C boiler | 22h/135° C boiler |
| Rheo 3'/190°C | ML | | 1.92 | 1.25 | 1.77 | 1.48 |
| Thickness | mm | | | | | |
| Density | kg/l | | 1.597 | 1.5351 | 1.5622 | 1.5538 |
| Hardness | °Sh A | | 87 | 85 | 88 | 88 |
| Tensile strength S3 | Mpa | > 3 | 3.8 | 3.6 | 3.1 | 3.3 |
| Elongation at break | % | > 200 | 30 | 346 | 21 | 27 |
| Tear resistance trouser | N/mm | > 6 | 15.7 | 12 | 12.9 | 16.5 |
| Aging | | | 7d/100°C | 7d/100°C | 7d/100°C | 7d/100°C |
| Hardness | °Sh A | | | | | |
| Tensile strength S3 | Mpa | > 3 | | | | |
| Elongation at break | % | > 200 | | | | |
| | | | | | | |
| 1.0 mm Class B free hanging | Thickness mm | | | | 1.06 | 1.08 |
| | | | 0.98 | 1.04 | 1.08 | 1.06 |
| | | | 1.00 | 1.00 | | |
| | Time s | | 96 | 88 | 90 | 91 |
| | | | 101 | 78 | 90 | 95 |
| | | | 98 | 83 | 90 | 93 |

| **Property** | **Unit** | **MR** | **L1735-09-70** | **L1735-09-71** |
|---|---|---|---|---|
| | | | 25 phr Polwhite | |
| | | | 20 phr TOF | |
| | | | 10 phr N330 | |
| Vulcanizing | | | 22h/135°C boiler | 22h/135°C boiler |
| Rheo 3'/190°C | ML | | 1.06 | |
| Thickness | mm | | | |
| Density | kg/l | | 1.560 | 1.55 |
| Hardness | °Sh A | | 86 | 84 |
| Tensile strength S3 | Mpa | > 3 | 3.3 | 2.7 |
| Elongation at break | % | > 200 | 37 | 40 |
| Tear resistance trouser | N/mm | > 6 | 13.6 | 14.5 |
| Aging | | | 7d/100°C | 7d/100°C |
| Hardness | °Sh A | | | |
| Tensile strength S3 | Mpa | > 3 | | |
| Elongation at break | % | > 200 | | |
| | | | | |
| 1.0 mm Class B free hanging | Thickness mm | | 1.05 | 1.06 |
| | | | 1.06 | 1.09 |
| | Time s | | 90 | 95 |
| | | | 96 | 94 |
| | | | 93 | 94 |

| **Property** | **Unit** | **MR** | **L1735-09-72** | **L1735-19-73** | **L1735-19-74** | **L1735-09-75** | **L1735-09-76** |
|---|---|---|---|---|---|---|---|
| | | | Carbofoil 35phr | Carbofoil 35phr | Carbofoil 35phr | Carbofoil 10 phr | Carbofoil 22,5 phr |
| | | | ATH 170 phr | ATH 130 phr | ATH 120 phr | ATH 200 phr | ATH 185 phr |
| | | | TOF 20 phr | EPFR 80 phr | EPFR 120 phr | TOF 20 phr | TOF 20 phr |
| | | | | TOF 20 phr | TOF 20 phr | | |
| Vulcanizing | | | 22h/135° C boiler | 22h/135° C boiler | 22h/135° C boiler | 22h/135° C boiler | 22h/135° C boiler |
| Rheo 3'/190°C | ML | | | | | | |
| Thickness | mm | | | | | | |
| Density | kg/l | | 1.430 | 1.43 | 1.43 | 1.45 | 1.44 |
| Hardness | °Sh A | | 78 | 82 | 83 | 77 | 77 |
| Tensile strength S3 | Mpa | > 3 | 3.2 | 2.2 | 2.5 | 3.7 | 3.1 |
| Elongation at break | % | > 200 | 265 | 43 | 36 | 417 | 352 |
| Tear resistance trouser | N/mm | > 6 | 9.5 | 11.4 | 11.9 | 9.1 | 9.1 |
| Aging | | | 7d/100°C | 7d/100°C | 7d/100°C | 7d/100°C | 7d/100°C |
| Hardness | °Sh A | | | | | 78 | 77 |
| Tensile strength S3 | Mpa | > 3 | | | | 3.6 | 3.6 |
| Elongation at break | % | > 200 | | | | 282 | 285 |
| | | | | | | | |
| 1.0 mm Class B free hanging | Thickness mm | | 1.10 | 1.06 | 1.10 | 1.00 | 0.95 |
| | | | 1.14 | 1.06 | 1.10 | 1.00 | 0.95 |
| | Time s | | immediatel y off after removing the flame | immediatel y off after removing the flame | immediatel y off after removing the flame | 220 s | flame out at 32 s |
| | | | | | | 205 s | |
| | | | | | | 212 s | |

| **Property** | **Unit** | **MR** | **84970-09-03** |
|---|---|---|---|
| Vulcanizing | | | 22h/135°C boiler |
| Rheo 3'/190°C | ML | | 1.71 |
| Thickness | mm | | |
| Density | kg/l | | |
| Hardness | °Sh A | | |
| Tensile strength S3 | Mpa | > 3 | |
| Elongation at break | % | > 200 | |
| Tear resistance trouser | N/mm | > 6 | |
| Aging | | | 7d/100°C |
| Hardness | °Sh A | | |
| Tensile strength S3 | Mpa | > 3 | |
| Elongation at break | % | > 200 | |
| | | | |
| 1.0 mm Class B free hanging | Thick-ness mm | | 1.06 |
| | | | 1.01 |
| | Time s | | Right out 205 sec |
| | | | First sample went out immediately and second burned very slowly |

| Formula | Unit | 84970-09-03 production compound with Carbofoil 20 phr, TOF 20 phr, Carbon black 20 phr and ATH 180 phr. | |
|---|---|---|---|
| | | Create 2.2 m² sheet by vulcanizing 22 cm wide strips of lab roll in production 1 mm thick | Same, but second sample vulcanized |
| Vulcanizing | | oven 22h 135°C | |
| Rheo 3'/190°C | ML | 1.71 | |
| Thickness | mm | 1.00 | 1.23 |
| Density | kg/l | 1.430 | 1.430 |
| Hardness | °Sh A | 79 | 82 |
| Tensile strength S3 | Mpa | 4.4 | 4.1 |
| Elongation at break | % | 307 | 286 |
| Tear resistance trouser | N/mm | 14.2 | 13.5 |
| | | After aging 7d/100°C | |
| Hardness | °Sh A | | 85 |
| Tensile strength S3 | Mpa | | 4.8 |
| Elongation at break | % | | 220 |
| | | | |
| 1.0 mm Class B free hanging | Thickness mm | 1.06 | |
| | | 1.01 | |
| | time s | direct extinguish 205 sec | |
| Remarks | | First sample extinguished immediately and second burned very slowly | |

| Formula | Unit | L1735-09-77 | L1735-09-78 | | |
|---|---|---|---|---|---|
| | | Carbofoil 20 Sidistar 25 ATH 180 phr TOF 20 phr | Carbofoil 25 Sidistar 15 ATH 180 phr TOF 20 phr | | |
| Vulcanizing | | oven 22h 135°C on hot mill calendering till 1 mm | | | |
| Rheo 3'/190°C | ML | 1.83 | | | |
| Thickness | mm | 0.97 | 0.99 | | |
| Density | kg/l | 1.440 | 1.430 | | |
| Hardness | °Sh A | 75 | 77 | | |
| Tensile strength S3 | Mpa | 2.9 | 3.2 | | |
| Elongation at break | % | 276 | 272 | | |
| Tear resistance trouser | N/mm | 12.8 | 10.2 | | |

| After aging 7d/100°C | | | | | |
|---|---|---|---|---|---|
| Hardness | °Sh A | | 8.2 | | |
| Tensile strength S3 | Mpa | | 4 | | |
| Elongation at break | % | | 166 | | |
| | | | | | |
| 1.0 mm Class B free hanging | Thickness mm | 1.00 | 0.99 | | |
| | | 1.00 | 0.99 | | |
| | time s | 272 | direct extinguish 150 sec | | |
| | | 262 | | | |

| Formula | Unit | LD1735-9-01 | LD1735-9-02 | LD1735-9-03 |
|---|---|---|---|---|
| | | formula 328893 Sulfur 0.90 phr TBBS 80 0.70 phr TBzTD 70 0.40 phr | formula 328893 Sulfur 1.20 phr CBS 80 1.00 phr TBzTD 70 0.60 phr | formula 328893 Sulfur 1.40 phr CBS 80 1.20 phr TBzTD 70 0.80 phr |
| Vulcanizing | | oven 22h 135°C on hot mill calendering till 1 mm | | |
| Rheo 3'/190°C | ML | too slow cure | | |
| Thickness | mm | | 1.15 | 1.14 |
| Density | kg/l | | 1.40 | 1.40 |
| Hardness | °Sh A | | 68 | 69 |
| Tensile strength S3 | Mpa | | 4.7 | 4.7 |
| Elongation at break | % | | 289 | 211 |
| Tear resistance trouser | N/mm | | 4.0 | 2.6 |

| | | After aging 7d/100°C | | |
|---|---|---|---|---|
| Hardness | °Sh A | | 69 | 69 |
| Tensile strength S3 | Mpa | | 4.2 | 4.8 |
| Elongation at break | % | | 166 | 198 |
| | | | | |
| 1.0 mm Class B free hanging. | Thickness mm | | 1.15 | 1.14 |
| | time s | first sample | 48 | 58 |
| Needed > 60 s | | second sample | 40 | 48 |
| remarks | | | crunches and pieces fall down burning | |

| Formula | Unit | LD1735-9-04 | LD1735-9-05 | LD1735-9-06 |
|---|---|---|---|---|
| | | formula 328893 Sulfur 1.20 phr CBS 80 1.00 phr TBzTD 70 0.60 phr 30 phr par oil | formula 328893 Sulfur 1.00 phr CBS 80 1.00 phr TBzTD 70 0.50 phr 30 phr par oil | formula 328893 Sulfur 0.90 phr CBS 80 0.80 phr TBzTD 70 0.50 phr 30 phr par oil |
| Vulcanizing | | oven 22h 135°C on hot mill calendering till 1 mm | | |
| Rheo 3'/190°C | ML | | | |
| Thickness | mm | 1.00 | 1.06 | 0.99 |
| Density | kg/l | 1.470 | 1.480 | 1.480 |
| Hardness | °Sh A | 76 | 76 | 75 |
| Tensile strength S3 | Mpa | 5.3 | 5.3 | 5.3 |
| Elongation at break | % | 96 | 95 | 82 |
| Tear resistance trouser | N/mm | 3.4 | 3.6 | 4.3 |
| | | After aging 7d/100°C | | |
| Hardness | °Sh A | 77 | 77 | 75 |
| Tensile strength S3 | Mpa | 5.5 | 5.3 | 5.2 |
| Elongation at break | % | 99 | 103 | 98 |
| | | | | |
| 1.0 mm Class B free hanging. | Thickness mm | 1.00 | 1.06 | 0.99 |
| | time s | 53* | 82 | 68 |
| Needed > 60 s | | 60 | 63 | 72 |
| Remark | | *flame burner was too big | | |

| Formula | Unit | LD1735-9-07 | LD1735-9-08 | LD1735-9-09 | LD1735-9-10 |
|---|---|---|---|---|---|
| | | formula 328893 Sulfur 0.90 phr CBS 80 0.80 phr TBzTD 70 0.50 phr 30 phr par oil | formula 328893 Sulfur 0.80 phr TBBS 80 0.70 phr TBzTD 70 0.40 phr 30 phr par oil | formula 328893 Sulfur 0.80 phr TBBS 80 0.70 TBzTD 70 0.40 30 phr par oil Nordel 4520 20 Nordel 4725 20 | formula 328893 Sulfur 0.60 phr TBBS 80 0.50 TBzTD 70 0.30 30 phr par oil Nordel 4520 20 Nordel 4725 20 |
| Vulcanizing | | oven 22h 135°C on hot mill calendering till 1 mm | | | |
| Rheo 3'/190°C | ML | 1.91 | 1.86 | 1.89 | 1.78 |
| Thickness | mm | 1.10 | 1.09 | 1.12 | 1.08 |
| Density | kg/l | 1.470 | 1.470 | 1.470 | 1.480 |
| Hardness | °Sh A | 76 | 75 | 75 | 73 |
| Tensile strength S3 | Mpa | 4.0 | 3.9 | 3.9 | 3.8 |
| Elongation at break | % | 103 | 104 | 100 | 369 |
| Tear resistance trouser | N/mm | 3.4 | 4.4 | 5.1 | 13.2 |

| | | After aging 7d/100°C | | | |
|---|---|---|---|---|---|
| Hardness | °Sh A | | | | |
| Tensile strength S3 | Mpa | | | | |
| Elongation at break | % | | | | |
| | | | | | |
| 1.0 mm Class B free hanging. | Thickness mm | | | | 1.02 |
| | | | | | 1.08 |
| | time s | | | | 64 |
| Needed > 60 s | | | | | 64 |

| Formula | Unit | Carlisle 84970-09-04 | Carlisle 84970-09-04 | DOW 86570-09-01 | DOW 86570-09-01 |
|---|---|---|---|---|---|
| | | 1.0 mm | 1.2 mm | 1.0 mm | 1.2 mm |
| | | | | formula 328893 Sulfur 0.60 phr TBBS 80 0.50 TBzTD 70 0.30 30 phr par oil Nordel 4520 20 Nordel 4725 20 | |
| Vulcanizing | | production roll 20h 135°C AN139 80 m 1.0 mm and 110 m 1.2 mm | | | |
| Rheo 3'/190°C | ML | | | | |
| Thickness | mm | 0.91 - 0.95 | 1.11 - 1.16 | 0.98 - 0.99 | 1.12 - 1.21 |
| Density | kg/l | 1.440 | 1.440 | 1.500 | 1.500 |
| Hardness | °Sh A | 73 | 72 | 73 | 72 |
| Tensile strength S3 | Mpa | 3.5 | 4.0 | 3.8 | 4.0 |
| Elongation at break | % | 470 | 435 | 610 | 620 |
| Tear resistance trouser | N/mm | 9.5 | 10.2 | 16.3 | 15.3 |

| | | After aging 7d/100°C | | | |
|---|---|---|---|---|---|
| Hardness | °Sh A | | | | |
| Tensile strength S3 | Mpa | 4.3 | | | |
| Elongation at break | % | 299 | | | |
| | | | | | |
| 1.0 mm Class B free hanging. | Thickness mm | 0.95 | 1.15 | 0.99 | 1.20 |
| | time s | direct extinguish both | direct extinguish both | 63 | 76 |
| Needed > 60 s | | | | 62 | 74 |

The examples set forth above are provided to give those of ordinary skill in the art a complete disclosure and description of how to make and use various embodiments of the compositions, and are not intended to limit the scope of what the inventors regard as their invention. Modifications of the above-described modes for carrying out the invention that are obvious to persons of skill in the art are intended to be within the scope of the following claims.

## Claims

1. A composition, comprising:
ethylene propylene diene monomer (EPDM) polymer, aluminum hydroxide, expandable graphite, tris(2-ethylhexyl) phosphate, and a maleic anhydride adduct of polybutadiene, wherein the composition is mineral oil free.

2. The composition of claim 1, further comprising a curing agent.

3. The composition of claim 2, wherein the curing agent comprises sulfur or a sulfur releasing compound.

4. The composition of claim 1, further comprising an accelerator.

5. The composition of claim 4, wherein the accelerator comprises zinc oxide, steric acid, tetrabenzyl thiuram disulfide, N-cyclohexyl-2-benzothiazylsulfenamide, or a combination thereof.

6. The composition of claim 1, further comprising a filler.

7. The composition of claim 6, wherein the filler comprises carbon black.

8. The composition of claim 1, wherein the composition is halogen free.

9. The composition of claim 1, wherein the composition is antimony trioxide free.

10. A composition, comprising:
ethylene propylene diene monomer (EPDM) polymer, sulfur, tetrabenzyl thiuram disulfide, N-cyclohexyl-2-benzothiazylsulfenamide, zinc oxide, stearic acid, a maleic anhydride adduct of polybutadiene, expandable graphite, carbon black, tris(2-ethylhexyl) phosphate, and aluminum hydroxide, wherein the composition is mineral oil free.

11. A method of making an EPDM membrane comprising the steps of:
processing a homogeneous mixture of the composition of claim 1 into a membrane using either calendaring or a roller die extruder; and
heat curing the membrane.

12. The method of claim 11, further comprising the step of laminating a fabric layer to one side of the membrane before or after the membrane is vulcanized.

13. The method of claim 11, further comprising the step of laminating a fabric layer to each side of the membrane before or after the membrane is vulcanized.

14. The method of claim 11, further comprising the step of laminating a glass scrim layer to one side of the membrane before or after the membrane is vulcanized.

15. The method of claim 11, further comprising the step of laminating a glass scrim layer to each side of the membrane before or after the membrane is vulcanized.

## Patentansprüche

1. Zusammensetzung, die Folgendes umfasst:
Ethylen-Propylen-Dien-Monomer- (EPDM-) Polymer, Aluminiumhydroxid, expandierbaren Graphit, Tris(2-ethylhexyl)phosphat und ein Maleinsäureanhydrid-Addukt von Polybutadien, wobei die Zusammensetzung frei von Mineralöl ist.

2. Zusammensetzung nach Anspruch 1, die weiters ein Härtungsmittel umfasst.

3. Zusammensetzung nach Anspruch 2, wobei das Härtungsmittel Schwefel oder eine Schwefel freisetzende Verbindung umfasst.

4. Zusammensetzung nach Anspruch 1, die weiters einen Beschleuniger umfasst.

5. Zusammensetzung nach Anspruch 4, wobei der Beschleuniger Zinkoxid, Stearinsäure, Tetrabenzylthiuramdisulfid, N-Cyclohexyl-2-benzothiazylsulfenamid oder eine Kombination davon umfasst.

6. Zusammensetzung nach Anspruch 1, die weiters einen Füllstoff umfasst.

7. Zusammensetzung nach Anspruch 6, wobei der Füllstoff Ruß umfasst.

8. Zusammensetzung nach Anspruch 1, wobei die Zusammensetzung frei von Halogenen ist.

9. Zusammensetzung nach Anspruch 1, wobei die Zusammensetzung frei von Antimontrioxid ist.

10. Zusammensetzung, die Folgendes umfasst:
Ethylen-Propylen-Dien-Monomer- (EPDM-) Polymer, Schwefel, Tetrabenzylthiuramdisulfid, N-Cyclohexyl-2-benzothiazylsulfenamid, Zinkoxid, Stearinsäure, ein Maleinsäureanhydrid-Addukt von Polybutadien, expandierbaren Graphit, Ruß, Tris(2-ethylhexyl)phosphat und Aluminiumhydoxid, wobei die Zusammensetzung frei von Mineralöl ist.

11. Verfahren zur Herstellung einer EPDM-Membran, das die folgenden Schritte umfasst:
das Verarbeiten eines homogenen Gemischs einer Zusammensetzung nach Anspruch 1 zu einer Membran entweder unter Verwendung eines Kalanders oder eines Walzformextruders; und
das Wärmehärten der Membran.

12. Verfahren nach Anspruch 11, das weiters den Schritt des Auflaminierens einer Stoffschicht auf eine Seite der Membran umfasst, bevor oder nachdem die Membran vulkanisiert wird/wurde.

13. Verfahren nach Anspruch 11, das weiters den Schritt des Auflaminierens einer Stoffschicht auf jede Seite der Membran umfasst, bevor oder nachdem die Membran vulkanisiert wird/wurde.

14. Verfahren nach Anspruch 11, das weiters den Schritt des Auflaminierens einer Glasgitterstoffschicht auf eine Seite der Membran umfasst, bevor oder nachdem die Membran vulkanisiert wird/wurde.

15. Verfahren nach Anspruch 11, das weiters den Schritt des Auflaminierens einer Glasgitterstoffschicht auf jede Seite der Membran umfasst, bevor oder nachdem die Membran vulkanisiert wird/wurde.

## Revendications

1. Composition, comprenant :
du polymère d'éthylène-propylène-diène monomère (EPDM), de l'hydroxyde d'aluminium, du graphite expansible, du phosphate de tris(2-éthylhexyle) et un produit d'addition d'anhydride maléique de polybutadiène, dans laquelle la composition est exempte d'huile minérale.

2. Composition selon la revendication 1, comprenant en outre un agent de durcissement.

3. Composition selon la revendication 2, dans laquelle l'agent de durcissement comprend du soufre ou un composé libérant du soufre.

4. Composition selon la revendication 1, comprenant en outre un accélérateur.

5. Composition selon la revendication 4, dans laquelle l'accélérateur comprend de l'oxyde de zinc, de l'acide stérique, du disulfure de tétrabenzylthiurame, du N-cyclohexyl-2-benzothiazylsulfénamide, ou une combinaison de ceux-ci.

6. Composition selon la revendication 1, comprenant en outre une charge.

7. Composition selon la revendication 6, dans laquelle la charge comprend du noir de carbone.

8. Composition selon la revendication 1, dans laquelle la composition est exempte d'halogène.

9. Composition selon la revendication 1, dans laquelle la composition est exempte de trioxyde d'antimoine.

10. Composition, comprenant :
un polymère d'éthylène-propylène-diène monomère (EPDM), du soufre, du disulfure de tétrabenzylthiurame, du N-cyclohexyl-2-benzothiazylsulfénamide, de l'oxyde de zinc, de l'acide stéarique, un produit d'addition d'anhydride maléique de polybutadiène, du graphite expansible, du noir de carbone, du phosphate de tris(2-éthylhexyle) et de l'hydroxyde d'aluminium, dans lequel la composition est exempte d'huile minérale.

11. Procédé de fabrication d'une membrane EPDM, comprenant les étapes consistant à :
transformer un mélange homogène de la composition de la revendication 1 en une membrane en utilisant un calandrage ou une extrudeuse à filière à rouleaux ; et
faire durcir la membrane à chaud.

12. Procédé selon la revendication 11, comprenant en outre l'étape consistant à stratifier une couche de tissu sur un côté de la membrane avant ou après la vulcanisation de la membrane.

13. Procédé selon la revendication 11, comprenant en outre l'étape consistant à stratifier une couche de tissu de chaque côté de la membrane avant ou après la vulcanisation de la membrane.

14. Procédé selon la revendication 11, comprenant en outre l'étape consistant à stratifier une couche de canevas de fibre de verre sur un côté de la membrane avant ou après la vulcanisation de la membrane.

15. Procédé selon la revendication 11, comprenant en outre l'étape consistant à stratifier une couche de canevas de fibre de verre de chaque côté de la membrane avant ou après la vulcanisation de la membrane.
